# EUROPEAN PATENT APPLICATION

(11) **EP 4 821 986 A1**
(43) Date of publication of application: **14.10.2026**
(21) Application number: 25169982.3
(22) Date of filing: 11.04.2025
(51) Int. Cl.: C08L 83/04, C08J 11/04, C08J 11/14, C08G 77/16

(54) **ORGANOPOLYSILOXANE DERIVED FROM RECYCLED SILICONES**

(71) Applicant: Henkel AG & Co. KGaA, 40589 Düsseldorf (DE)
(72) Inventor: Schafhausen, Niklas, 40627 Düsseldorf (DE); Gutacker, Andrea, 40764 Langenfeld (DE); Geitner, Felix, 40822 Mettmann (DE); Dunekake, Ralf, 40589 Düsseldorf (DE); Mejia, Esteban, 18059 Rostock (DE); Kunz, Malte, 18055 Rostock (DE)

(57) **Abstract**

The invention relates to an organopolysiloxane derived from a recycled organopolysiloxane and/or cyclic siloxane compound. The invention also relates to a curable composition comprising said organopolysiloxane, use of said organopolysiloxane, and adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the same.

## Description

The invention relates to an organopolysiloxane derived from a recycled organopolysiloxane and/or cyclic siloxane compound. The invention also relates to a curable composition comprising said organopolysiloxane, use of said organopolysiloxane, and adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the same.

Silicones are a widely used material owing to their unique thermal and mechanical stability as well as low toxicity. However, silicones require a large amount of energy during production, thus release a substantial amount of carbon dioxide. The reduction of energy and the associated reduction of carbon footprint is crucial in a more carbon neutral world.

As sustainable and environment-friendly materials, recycled silicones have been suggested. However, recycling of silicone waste is a big challenge nowadays, since reuse of generally cured silicones is mostly impossible. Depolymerization of silicone polymers into reusable building blocks would be an attractive option for effective recycling and valorization of siloxane polymer waste. For a circular economy, it would be important to bring back silicone waste into the production chain, at best through chemical recycling methods. Unfortunately, the known recycling methods have many drawbacks, for examples, the methods are energetically inefficient, require high working temperatures, and the use of highly reactive depolymerization reagents. Recycling of silicones has been known as an energy intensive process compared to Müller-Rochow process, which is an industrially established production process of silicones.

US 5,892,087 relates to a process for decomposing siloxane bond-containing compound by an alkali decomposer characterized in that one or more selected from a group consisting of secondary and tertiary aliphatic alcohols are used as a decomposition facilitator, and if desired, the decomposition product is further sonicated and treated with a terminator.

EP 3 744 774 A1 discloses a process for recycling silicones, by the chemical transformation thereof to silanes and/or siloxanes having acetoxy groups, wherein the silicones to be recycled are subjected to a heat treatment in digestion systems comprising acetic anhydride and/or acetoxysiloxane, and at least one Brønsted acid, preferably with addition of acetic acid.

The publication Vu et al. Back-to-cyclic monomers: chemical recycling of silicone waste using a [polydentate ligand-potassium silanolate] complex Green Chemistry, 2023, 25, 3869 reports silicone depolymerization using a combination of a crown ether and potassium silanolate as nucleophile. The reaction was carried out at 140°C in vacuum. The reaction conditions are very harsh, and the catalyst used for the reactions are very expensive.

There is an increased desire to reduce carbon footprint and to produce sustainable and environment-friendly silicones.

It is therefore an object of the present invention to provide sustainable and environment-friendly silicones that allow reduction of energy consumption-related carbon footprint while showing similar performances as compared to conventional production of silicones starting from raw quartz sand (silicon dioxide) through its reduction to silicon metal in various purities. These processes, similar to the production of iron or steel, release quantitative amounts of carbon dioxide during production due to the reduction of silicon through the oxidation of carbon at high temperature. In a second step silicon metal is subjected to Müller-Rochow- / direct-process forming methylchlorosilanes. To produce silicones chlorosilanes are hydrolyzed to silanols which undergo condensation to linear or cyclic (poly)siloxanes. Through process parameters and the use of appropriate end-capping agents different functionalized poly-dimethyl-siloxanes are produced on industrial scale.

In ACS Energy Lett. 2020, 5, 3628-3632 Maldonado describes the need for change in the production of solar grade silicon metal and currently discussed ways to tackle the high energy demands of silicon reduction. It is evident that the current approach to silicon production requires significant improvements to shift from fossil to renewable energy.

The present invention achieves said object by providing recycled silicones, in particular recycled organopolysiloxanes and/or cyclic siloxane compounds, with comparable or reduced energy requirement for production when compared to conventional virgin silicones synthesized by Müller-Rochow process. The energy consumption can be utilized in the translation to a product carbon footprint.

In a first aspect, the invention relates to an organopolysiloxane derived from a recycled organopolysiloxane and/or cyclic siloxane compound.

In another aspect, the invention relates to a curable composition comprising at least one organopolysiloxane derived from a recycled organopolysiloxane and/or cyclic siloxane compound.

In a still further aspect, the invention relates to use of an organopolysilixoane derived from a recycled organopolysiloxane and/or cyclic siloxane compound.

Finally, the products of said process allow for simple use for preparation of efficient adhesives, sealants, and/or coating materials and for use as additive and as substitute for silicone oils.

As used herein, the singular forms "a", "an" and "the" include plural referents unless the context clearly dictates otherwise.

The term "at least one," as used herein, means 1 or more, i.e., 1, 2, 3, 4, 5, 6, 7, 8, 9, or more. With reference to an ingredient, the indication refers to the type of ingredient and not to the absolute number of molecules. "At least one polymer" thus means, for example, at least one type of polymer, i.e., that one type of polymer or a mixture of several different polymers may be used. Together with the weight indication, the indication refers to all compounds of the stated type which are contained in the composition/mixture, i.e., that the composition contains no further compounds of this type besides the stated quantity of the compounds in question.

The terms "comprising", "comprises" and "comprised of" as used herein are synonymous with "including", "includes", "containing" or "contains", and are inclusive or open-ended and do not exclude additional, non-recited members, elements, or method steps. If used, the phrase "consisting of" is closed and excludes all additional elements. Further, the phrase "consisting essentially of" excludes additional material elements but allows the inclusion of non-material elements that do not substantially change the nature of the invention.

When amounts, concentrations, dimensions, and other parameters are expressed in the form of a range, a preferable range, an upper limit value, a lower limit value or preferable upper and limit values, it should be understood that any ranges obtainable by combining any upper limit or preferable value with any lower limit or preferable value are also specifically disclosed, irrespective of whether the obtained ranges are clearly mentioned in the context.

The term "about", as used herein in connection with a numerical value, relates to a variance of ±20%, preferably ±10% of the respective value.

The words "preferred", "preferably", "desirably" and "particularly", and synonyms thereof, are used frequently herein to refer to embodiments of the disclosure that may afford particular benefits, under certain circumstances. However, the recitation of one or more preferable, preferred, desirable or particular embodiments does not imply that other embodiments are not useful and is not intended to exclude those other embodiments from the scope of the disclosure.

As used throughout this application, the word "may" is used in a permissive sense - that is meaning to have the potential to - rather than in the mandatory sense.

As used herein, room temperature is 23°C plus or minus 2°C. As used herein, "ambient conditions" means the temperature and pressure of the surroundings in which the composition is located or in which a coating layer or the substrate of said coating layer is located.

The molecular weights given in the present text refer to number average molecular weights (Mₙ), unless otherwise stipulated. All molecular weight data refers to values obtained by gel permeation chromatography (GPC) carried out using Water 2695 HPLC equipped with 3 Polypore columns and using a RI detector at 40°C. Stabilized toluene was used as eluent at 1 mL/min flow rate and a column temperature of 40°C. The calibration of the device was carried out using polystyrene standards. Preferably, all measurements are in accordance with DIN 55672-1:2007-08 at 40°C.

As used herein, "polydispersity" (PDI) refers to a measure of the distribution of molecular mass given in a resin sample. The polydispersity is calculated by dividing the weight average molecular weight (M_{w}) by the number average molecular weight (Mₙ).

Any hydroxyl (OH) values given herein are measured according to DIN 53240-2.

Viscosities of polymers and of compositions containing said polymers as described herein are, unless otherwise stipulated, measured using the Brookfield Viscometer, Model RVT at standard conditions of 20°C and 50% Relative Humidity (RH). The viscometer is calibrated using silicone oils of known viscosities, which vary from 5,000 cps to 50,000 cps. A set of RV spindles that attach to the viscometer are used for the calibration. Measurements of the polymers are done using the No. 6 spindle at a speed of 20 revolutions per minute for 1 minute until the viscometer equilibrates. The viscosity corresponding to the equilibrium reading is then calculated using the calibration.

As used herein, the term "recycled organopolysiloxane" or "recycled cyclic siloxane compound" or "recycled organopolysiloxane and/or cyclic siloxane compound" refers to an organopolysiloxane or cyclic siloxane compound that is derived from silicone wastes and requires comparable or reduced energy for the production compared to a non-recycled virgin organopolysiloxane and/or cyclic siloxane compound. Preferably, the recycled organopolysiloxane and/or cyclic siloxane compound is obtainable by a process comprising a step of depolymerizing a silicone formulation.

As used herein the term "non-recycled organopolysiloxane" or "non-recycled cyclic siloxane compound" or "non-recycled organopolysiloxane and/or cyclic siloxane compound" refers to a conventional virgin material produced by the following processes:
Conventional production of silicones starts from raw quartz sand (silicon dioxide) through its reduction to silicon metal in various purities. In a second step silicon metal is subjected to Müller-Rochow- / direct-process forming methylchlorosilanes. To produce silicones chlorosilanes are hydrolyzed to silanols which undergo condensation to linear or cyclic (poly)siloxanes.

As used herein, the term "silicone formulation" refers to a composition that must contain a silicone polymer.

For convenience in the description of the process of this invention, unsaturation provided by CH₂=CH-CH₂- terminal groups is referred to as "allyl" unsaturation.

As used herein, the term "hydrocarbyl" group refers to univalent group formed by removing a hydrogen atom from a hydrocarbon, e. g., methyl, ethyl, propyl, phenyl.

As used herein, "C₁-C₈ alkyl" group refers to a monovalent group that contains 1 to 8 carbon atoms, that is a radical of an alkane and includes linear and branched organic groups. Examples of alkyl groups include but are not limited to: methyl; ethyl; propyl; isopropyl; n-butyl; isobutyl; sec-butyl; tert-butyl; n-pentyl; n-hexyl; n-heptyl; and 2-ethylhexyl. In the present invention, such alkyl groups may be unsubstituted or may be substituted with one or more substituents such as halo, nitro, cyano, amido, amino, sulfonyl, sulfinyl, sulfanyl, sulfoxy, urea, thiourea, sulfamoyl, sulfamide and hydroxy. The halogenated derivatives of the exemplary hydrocarbon radicals listed above might, in particular, be mentioned as examples of suitable substituted alkyl groups. In general, however, a preference for unsubstituted alkyl groups containing from 1 to 6 carbon atoms (C₁-C₆ alkyl) - for example unsubstituted alkyl groups containing from 1 to 4 atoms (C₁-C₄ alkyl) - should be noted.

As used herein, the term "C₂-C₈ alkenyl" group refers to an aliphatic hydrocarbon group which contains 2 to 8 carbon atoms and at least one carbon-carbon double bond, e. g., ethenyl, propenyl, butenyl, or pentenyl and structural isomers thereof such as 1- or 2-propenyl, 1-, 2-, or 3-butenyl, etc. Alkenyl groups can be linear or branched and substituted or unsubstituted. If they are substituted, the substituents are as defined above for alkyl.

As used herein, the term "C₂-C₈ alkynyl" group refers to an aliphatic hydrocarbon group which contains 2 to 8 carbon atoms and at least one carbon-carbon triple bond, e. g., ethynyl (acetylene), propynyl, butynyl, or pentynyl and structural isomers thereof as described above. Alkynyl groups can be linear or branched and substituted or unsubstituted.

The term "C₃-C₁₀ cycloalkyl" is understood to mean a saturated, mono-, bi- or tricyclic hydrocarbon group having from 3 to 10 carbon atoms. Examples of cycloalkyl groups include: cyclopropyl; cyclobutyl; cyclopentyl; cyclohexyl; cycloheptyl; cyclooctyl; adamantane; and norbornane.

As used herein, a "C₆-C₁₈ aryl" group used alone or as part of a larger moiety - as in "aralkyl group" - refers to optionally substituted, monocyclic, bicyclic, and tricyclic ring systems in which the monocyclic ring system is aromatic or at least one of the rings in a bicyclic or tricyclic system is aromatic. The bicyclic and tricyclic ring systems include benzofused 2-3 membered carbocyclic rings. Exemplary aryl groups include: phenyl; indenyl; naphthalenyl; tetrahydronaphthyl, tetrahydroindenyl; tetrahydroanthracenyl; and anthracenyl. And a preference for phenyl groups may be noted.

As used herein, an "aralkyl" group refers to an alkyl group that is substituted with an aryl group. As example of an aralkyl group is benzyl.

The terms "C₁-C₆₀ alkylene" group and "C₁-C₂₀ alkylene" group refer respectively to divalent groups that contain from 1 to 60 of from 1 to 20 carbon atoms, that are radicals of an alkane and include linear, branched, or cyclic groups, which groups may be substituted or unsubstituted and may optionally be interrupted by at least one heteroatom.

Where mentioned, the expression "interrupted by at least one heteroatom" means that the main chain of a residue comprises, as a chain member, at least one atom that differs from carbon atom. More particularly the term "heteroatom" refers to nitrogen, oxygen, halogens, phosphorus or sulfur. Oxygen (O) and nitrogen (N) may be mentioned as typical heteroatoms in the context of the present invention.

As used herein, the term "arylene" group refers to a divalent group that is a radical of an aryl group. Suitable arylene group includes phenylene, furanylene, piperidylene, and naphthylene.

Where mentioned, the expression "contain at least one heteroatom" means that the main chain or side chain of a residue comprises at least one atom that differs from carbon atom and hydrogen. Preferably the term "heteroatom" refers to nitrogen, oxygen, silicon, sulfur, phosphorus, halogens such as chlorine (CI), bromine (Br), fluor (F). Oxygen (O) and nitrogen (N) may be mentioned as typical heteroatoms in the context of the present invention.

As used herein, the term "hydrocarbon residue" includes saturated or unsaturated hydrocarbon residues.

As used herein, the term "heterocyclic compound" refers to a saturated or unsaturated, monocyclic, bicyclic, polycyclic, or fused compound containing at least one heteroatom, preferably O, S, N, and/or P, in the ring structure.

As used herein, the term "halogen" refers to fluorine, chlorine, bromine, or iodine and correspondingly the term "halide" denotes fluoride, chloride, bromide, or iodide anions.

In accordance with established terminology, a primary alcohol is understood to be an alcohol, the hydroxy (-OH) group of which is present as a -CH₂-OH group. A "secondary alcohol group" or a "secondary hydroxyl group" is constituted by a hydroxy group (-OH) attached to a saturated carbon atom which has two other carbon atoms attached to it. Analogously, a "tertiary alcohol group" or "tertiary hydroxyl group" is constituted by a hydroxy group (-OH) attached to a saturated carbon atom which has three other carbon atoms attached to it.

The term "polymerization conditions" means the reaction conditions necessary to combine monomers, especially D3 to D7 cyclosiloxanes, into polymers, and in the context of this invention, those conditions necessary for ring-opened siloxanes to combine with one another to form a polysiloxane.

As used herein, the term "ring-opening polymerization" denotes a polymerization in which a cyclic compound (monomer) is opened to form a linear polymer. Reference in this context may be made to inter alia in: i) Duda, A. et al. Thermodynamics and Kinetics of Ring-Opening Polymerization in Handbook of Ring-Opening Polymerization, Wiley-VCH, Weinheim, Germany, (2009) page 8; ii) Choijnowski, J. et al. Kinetically controlled ring-opening polymerization, J. Inorg. Organomet. Polym. (1991) 1, pages 299-323; and, iii) Nuyken et al. Ring-Opening Polymerization-An Introductory Review Polymers 2013, 5, 361-403.

According to a preferred embodiment of the invention, at least 20%, more preferably 30%, even more preferably 50%, of the siloxane repeating units of the organopolysiloxane are derived from a recycled organopolysiloxane and/or cyclic siloxane compound.

According to a preferred embodiment of the invention, 100 % of the siloxane repeating units of the organopolysilxoane are derived from a recycled organopolysiloxane and/or cyclic siloxane compound.

The organopolysiloxanes derived from a recycled organopolysiloxane and/or cyclic siloxane compound according to the present invention can be obtained by a process comprising a step of depolymerizing silicone formulations, wherein said process requires comparable or reduced energy compared to the production of the non-recycled organopolysiloxane and/or cyclic siloxane compound. The process for producing non-recycled organopolysiloxane and/or cyclic siloxane compound is described above.

According to a preferred embodiment of the invention, the recycled organopolysiloxane and/or cyclic siloxane compound requires less than 110 %, preferably less than 80 %, more preferably less than 60 %, most preferably less than 40 %, of energy consumption for the production compared to a non-recycled organopolysiloxane and/or cyclic siloxane compound.

### Calculation of energy consumption

The framework used to execute calculation of energy consumption is implemented by the publication Piccinno et al. From laboratory to industrial scale: a scale-up framework for chemical processes in life cycle assessment studies. J. of Clean. Prod. 2016, 135, 1085-1097, which is hereby incorporated by reference.

### Input Factors

The scale-up of each reactant is performed linearly. If a lab procedure uses excess reactant, linear scale-up is applied. For reactant production, datasets for commonly used chemicals are used; if unavailable the production of such a chemical also according to the here described framework.

The processes involved in the synthesis are converted in industrial processes and empiric data is used to enable thermodynamic calculations for the Scale-Up.

**Table 1**

| Translation of laboratory to large-scale processes according to the presented framework. | |
|---|---|
| Laboratory scale process | Scaled-up process according to framework |
| Reaction under heating | Heated liquid batch reaction in an insulated batch reactor with an in-tank stirrer |
| Mixing (magnetic stirrer) | In-tank stirring |
| Dispersing | |
| Blending | Rotor-stator type homogenizer |
| Mixing (viscous solution) | |
| Homogenizing (all types) | |
| Dispersing | |
| Pestling in mortar | Grinding |
| Grinding/milling | |
| Other particle size reduction | |
| Filtration (e.g. membrane, reverse osmosis, dialysis) | Filtration/centrifugation |
| Sieving | |
| Centrifugation/cyclonic separation | |
| Other solid-liquid separation | |
| Distillation | Distillation |
| (Rotary evaporation) | |
| Vacuum drying | (Oven) drying/vaporization |
| Drying | |
| Rotary evaporation | |
| (Manual) Transferring of liquids | Pumping |
| Waste disposal | Pre-treatment (case specific) |
| | Solvent recycling - distillation |
| | Solvent recycling - filtration |
| | Co- and by-product isolation |
| Normally not included in laboratory process | Heat recovery through heat exchangers |

Solvents are needed for every liquid batch reaction. A 20% relative solvent reduction is used for scale-up since no exact concentration is needed. This is an estimate based on expert opinion; more accurate data is used if available.

The calculation of energy needed for a heated liquid phase batch reaction is presented, considering both the energy to heat the reaction mixture and the energy lost through the reactor walls. The calculations are simplified for use in LCA studies where detailed plant designs are unavailable.

The energy required to raise the reaction mixture to the reaction temperature from the starting temperature is calculated using: ${Q}_{heat} = {C}_{p} * {m}_{mix} * \left({T}_{r}-{T}_{0}\right)$ Where:
Qₕₑₐₜ is the energy required for raising the temperature (J)
Cₚ is the specific heat capacity of the solvent (J/kg·K) - a simplification, using the solvent's heat capacity and neglecting the contribution of reactants.
mₘᵢₓ is the mass of the reaction mixture (kg)
Tᵣ is the reaction temperature (K)
T₀ is the starting temperature (K, usually ambient)

Heat is lost through the reactor walls. The heat loss (Qₗₒₛₛ) is calculated using: ${Q}_{loss} = A * \frac{{k}_{a}}{S} * \left({T}_{r}-{T}_{out}\right) * t$ Where:
Qₗₒₛₛ is the heat loss on the reactor surface (J)
A is the surface area of the reactor (m²)
ΔT is the temperature difference between inside (Tᵣ) and outside (Tₒᵤₜ) of the reactor (K)
t is the reaction time (s)
kₐ is the thermal conductivity of the insulation material (W/m·K)
s is the thickness of the insulation (m)

The total heating energy required is the sum of the energy to reach the reaction temperature and the energy to compensate for heat loss, adjusted for the efficiency (η) of the heating device: ${Q}_{react} = \frac{{Q}_{heat} + {Q}_{loss}}{{η}_{heat}} = \frac{{C}_{p} * {m}_{mix} * \left({T}_{r}-{T}_{0}\right) + A * \frac{{k}_{a}}{s} * \left({T}_{r}-{T}_{out}\right) * t}{{η}_{heat}}$

Where:
Q_{react} is the total heating energy (J) ηₕₑₐₜ is the efficiency of the heating device (typically 75% for a 1000 L reactor, scaled with a factor of 0.02 for larger reactors)

The Framework provides empiric data to be used when more precise data is unavailable as in this case. Universal scale up procedures use 1000 L reactor size if not stated otherwise.

**Table 2**

| Suggested scale-dependent data for the calculation of heating energy. | | | | | | | |
|---|---|---|---|---|---|---|---|
| Physical entity | Symbol | Unit | 100 I | 500 l | 1'000 l | 5'000 l | 10'000 l |
| Reaction mixture volume | *V₍ₘᵢₓ₎* | m³ | 0.1 | 0.5 | 1 | 5 | 10 |
| Height of reactor | *L* | m | 0.519 | 0.888 | 1.119 | 1.913 | 2.410 |
| Diameter of reactor | *D* | m | 0.519 | 0.888 | 1.119 | 1.913 | 2.410 |
| Surface area | *A* | m² | 1.271 | 3.716 | 5.899 | 17.249 | 27.381 |
| Reactor volume | *V_{(reactor)}* | m³ | 0.11 | 0.55 | 1.1 | 5.5 | 11 |
| Insulation material | - | - | Glass fiber | Glass fiber | Glass fiber | Glass fiber | Glass fiber |
| Thermal conductivity of insulation | *kₐ* | $\frac{w}{m ∗ K}$ | 0.042 | 0.042 | 0.042 | 0.042 | 0.042 |
| Insulation thickness | s | m | 0.075 | 0.075 | 0.075 | 0.075 | 0.075 |
| Heat transfer coefficient of insulation | *kₐ*/s | $\frac{w}{{m}^{2} ∗ K}$ | 0.56 | 0.56 | 0.56 | 0.56 | 0.56 |
| Efficiency of heating element | *ηₕₑₐₜ* | % | 72% | 74% | 75% | 77% | 79% |
| Impeller diameter | *d* | m | 0.173 | 0.296 | 0.373 | 0.638 | 0.803 |
| Rate of heat loss per Kelvin | $\frac{A * {k}_{0}}{S}$ | $\frac{W}{K}$ | 0.712 | 2.081 | 3.303 | 9.659 | 15.333 |
| Starting and outside temperature | *T₀* = *Tₒᵤₜ* | *K* | 298.15 | 298.15 | 298.15 | 298.15 | 298.15 |

Factors influencing stirring energy are impeller type and diameter, rotational velocity, reaction mixture density, and reaction time. An efficiency factor accounts for energy loss. Average data for axial flow impellers is provided. The main formula used is the following equation: ${E}_{stir} \left[J\right] = \frac{{N}_{P} ∗ {ρ}_{mix} ∗ {N}^{3} ∗ {d}^{5} ∗ t}{{η}_{stir}}$ Where:
Eₛₜᵢᵣ is the stirring energy (J)
Nₚ is the power number (dimensionless), a constant specific to the impeller type and flow regime (turbulent flow is assumed). Average values are provided in Table 4.
ρₘᵢₓ is the density of the reaction mixture (kg/m³)
N is the rotational speed of the impeller (s⁻¹)
d is the diameter of the impeller (m)
ηₛₜᵢᵣ is the efficiency of the stirring device (dimensionless), accounting for energy losses due to friction

**Table 3**

| Suggested scale-dependent data for the calculation of the stirring energy. | | | | | | | |
|---|---|---|---|---|---|---|---|
| Physical entity | Symbol | Unit | 100 l | 500 l | 1'000 l | 5'000 l | 10'000 l |
| Impeller diameter | *d* | m | 0.173 | 0.296 | 0.373 | 0.638 | 0.803 |
| Power number of impeller | *Nₚ* | - | 0.79 Axial flow | 0.79 Axial flow | 0.79 Axial flow | 0.79 Axial flow | 0.79 Axial flow |
| | *Nₚ* | - | 3.44 Radial flow | 3.44 Radial flow | 3.44 Radial flow | 3.44 Radial flow | 3.44 Radial flow |
| Rotational speed of agitator | N | 1/s | 3.052 | 1.785 | 1.417 | 0.828 | 0.658 |
| Efficiency of agitator | *ηₛₜᵢᵣ* | % | 90 | 90 | 90 | 90 | 90 |

The impeller diameter is calculated as one-third of the reactor diameter. A standard rotational speed of 85 rpm for a 1000 L reactor is assumed, with other scales adjusted to maintain equal tip speed (N*d² = constant). The stirring energy equation is then adapted for a 1000 L reactor with an axial flow impeller, using the average power numbers from Table 4 and standard efficiency. The density of the reaction mixture is calculated as the mass of the mixture divided by its volume.

**Table 4**

| Suggested scale-dependent data for the calculation of the rotor-stator homogenizer energy draw. | | | | | | | |
|---|---|---|---|---|---|---|---|
| Physical entity | Symbol | Unit | 100 l | 500 l | 1'000 l | 5'000 l | 10'000 l |
| Impeller diameter | *d* | m | 0.072 | 0.111 | 0.139 | 0.260 | 0.288 |
| Power number of rotor | *Nₚ* | - | 2.39 | 2.39 | 2.39 | 2.39 | 2.39 |
| Rotational speed of rotor | *N* | 1/s | 48.333 | 48.333 | 48.333 | 20 | 20 |
| Efficiency of agitator | *ηₛₜᵢᵣ* | % | 90 | 90 | 90 | 90 | 90 |

After the reaction, isolation and purification steps are needed. These steps use additional energy and may produce by-products and waste. For scale up operations, homogenizing, grinding, distillation, filtration, centrifugation, drying, and pumping are described.

For homogenizing processes, only rotor-stator type homogenizers are considered. Energy requirement calculation uses the same equation as stirring, adapting parameters. Average data for impeller diameters and shear rates are used.

Grinding energy consumption depends on the size of material and type of grinding. Considering the wide range of possible materials, an average value is used when no experimental data is available. Vauck et al. Grundoperationen Chemischer Verfahrenstechnik, 11th ed., Deutscher Verlag für Grundstoffindustrie, 2000 studied various grinders and found mean values between 8-16 kWh/ton of grinded material. As conservative assumption, the upper value is used (16 kWh/ton).

Distillation involves heating a compound to its boiling point, then cooling the vapor to recover the liquid. The heating energy (Q_{dist}) calculation considers the energy to raise the temperature (Qₕₑₐₜ) and the enthalpy of vaporization (Qᵥₐₚ) needed to convert liquid to gas. The formula is: $\begin{matrix}{Q}_{dist} = \frac{{Q}_{heat} + {Q}_{νap} * \left(R+1\right)}{{η}_{heat} - 0.1} \\ = \frac{{C}_{p} * {m}_{mix} * \left({T}_{boil}-{T}_{0}\right) + {ΔH}_{νap} * {m}_{dist} * \left(1.2*{R}_{min}+1\right)}{{η}_{heat} - 0.1}\end{matrix}$ Where:
Cₚ being specific heat capacity (J/kgK)
mₘᵢₓ is the mass of liquid (kg)
T_{boil} is the boiling temperature (K)
T₀ is the starting temperature (K)
ΔHᵥₐₚ is the specific evaporation enthalpy (J/kg)
m_{dist} is the mass of distillate (kg)
ηₕₑₐₜ is the heating element efficiency (set at 70% in this framework)
R is the reflux ratio (ratio of liquid flow to distillate flow), typically set at 1.2 in this framework
Rₘᵢₙ is the minimum reflux ratio calculated by the Underwood equation: ${R}_{min} = \frac{1}{α - 1} \left(\frac{{X}_{LD}}{{X}_{LF}}-\frac{α * \left(1-{X}_{LD}\right)}{1 - {X}_{LF}}\right)$ Where:
   *α* is the relative volatility of the solvents (<1)
   X_{LD} is the target purity of distillate as molar fraction
   X_{LF} is the molar fraction of target compound in feed

A 10% lower heating element efficiency is used to account for heat loss. If experimental data is unavailable, an empirical value for cooling water consumption is estimated at 0.027 kg per kg of waste solvent.

Filtration energy consumption depends on particle size. An average value is provided based on a study by Alt et al. Solid-liquid separation, introduction. In: Ullmann's Encyclopedia of Industrial Chemistry. Wiley-VCH Verlag GmbH &Co. KGaA, 2000. Including all equipment, energy demand varies between 1-10 kWh/ton of dry material. For viscous liquids and large particle size the upper value of 10 kWh/ton is preferred.

The energy required for drying of solids (Q_{dry}) is determined by considering the energy needed to raise the temperature of the liquid to its boiling point and the enthalpy of evaporation. The formula is: ${Q}_{dry} = \frac{{C}_{p , liq} * {m}_{liq} * \left({T}_{boil}-{T}_{0}\right) + {ΔH}_{νap} * {m}_{νap}}{{η}_{dry}}$ Where:
C_{p,liq} is the specific heat capacity of the liquid (J/kgK)
m_{liq} is the mass of the liquid to be evaporated (kg)
T_{boil} is the boiling temperature of the liquid (K)
T₀ is the initial temperature (K)
ΔHᵥₐₚ is the specific enthalpy of vaporization (J/kg)
mᵥₐₚ is the mass of solvent to be evaporated
η_{dry} is the drier efficiency (the ratio between the heat required to vaporize the removed liquid and the heat used)

The drier efficiency (η_{dry}) varies considerably (30% to over 100% with efficient heat recovery). To simplify, an empiric standard efficiency of 80% is used, and the heat loss is already incorporated into this efficiency value. The mass of solvent to be evaporated (mᵥₐₚ) is found by comparing the weight before and after the drying step. Vacuum drying might be used for heat-sensitive materials, reducing heating energy but increasing energy consumption from the vacuum pump. This effect is considered to be balanced out in the calculation.

For transfer of liquids, pumping energy consumption depends on hydraulic head (gravitational, dynamic, static, frictional). Average values are provided but not utilized due to the lack of production site information (55 Jm/kg).

### Output Values

The outputs are essential to translate energy demand to carbon footprints and downstream processes. The reaction mixture, the output of a reaction step containing the target compound but not in isolated form serves as input for subsequent steps. Excess heat, if not needed, is recovered by heat exchange. Next the laboratory product yield might not reflect industrial production due to factors like purity requirements and additional purification steps. As conservative approach, laboratory yields are assumed for large scale processes.

Co- and by-products are handled differently depending on their economic value (co-products vs. by-products). Piccinno et al. suggests allocation or system expansion for co-products and modeling by-products as flows leaving the system for simplification. However, to achieve comparability and avoid multidimensional distortion, a physical allocation method (Single Output Allocation) is used so that 100 % of the consumed energy is allocated to the functional unit.

To verify the quality of the calculated energy data, results are compared to calculations carried out using DWSIM software of the same product systems. This software is used for calculating complex chemical engineering plants and provides extensive process data. The production of virgin silicone oil is further compared to industrial data measured at the production sites and published in life cycle databases.

A first order kinetic is assumed and a net zero reaction enthalpy for the recycling processes. Also, the potential of heat recovery in between the production steps is not realized.

| **Included** | **Excluded** |
|---|---|
| Processes of production of raw materials | Transportation, Capital Equipment, Packaging |
| Product Manufacturing | Disposal of Waste |
| Solvent recovery and upscale efficiency improvements | Recovery of Energy from Wastestreams by heat-exchange |
| Energy recovery from reactors and combustion gases by heat-exchange | Reaction Enthalpy |

### Recycled organopolysiloxane and/or cyclic siloxane compound

According to a preferred embodiment, the recycled organopolysiloxane has at least one terminal hydroxy group or alkyl group, more preferably at least two terminal hydroxy groups or alkyl groups, which are preferably endcapped. α,ω-hydroxy terminated organopolysiloxanes or α,ω-alkyl terminated organopolysiloxanes, in particular α,ω-methyl terminated organopolysiloxanes, are favored.

Whilst there is no specific intention to limit the process for the preparation of recycled organopolysiloxanes, the following embodiments illustrate the exemplary processes.

### (i) First embodiment of the preparation of recycled organopolysiloxane and/or cyclic siloxane compound

According to a preferred embodiment, the recycled organopolysiloxane and/or cyclic siloxane compound is obtainable by a process for depolymerization of a silicone formulation which comprises at least one organopolysiloxane polymer (A). The process for depolymerization of a silicone formulation comprises a step of reacting (A) the at least one organopolysiloxane polymer with (B) at least one base catalyst, preferably at least one metal hydroxide, (C) at least one alcohol, and (D) water at a temperature of >50 °C, preferably >60 °C, more preferably >70 °C, even more preferably >75 °C, most preferably >80 °C.

The at least one organopolysiloxane polymer (A) preferably has unit formula (I)

(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)

wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

Organopolysiloxane polymers generally comprise the monofunctional (M) siloxy units (i.e., the (R¹₃-ₓR²ₓSiO_{1/2}) siloxy units), difunctional (D) siloxy units (i.e., the (R¹_{2-y}R²_{y}SiO_{2/2}) siloxy units), trifunctional (T) siloxy units (i.e., the (R¹_{1-z}R²_{z}SiO_{3/2}) siloxy units), and quadrifunctional (Q) siloxy units (i.e., the (SiO_{4/2}) siloxy units). Although if the organopolysiloxane polymer includes at least one Q siloxy unit, the organopolysiloxane polymer is considered a silicone polymer by one of skill in the art, rather than a silicone resin, due to the degree of polymerization (DP) in the organopolysiloxane polymer and the molar fraction of Q siloxy units present therein.

The unit formula of the organopolysiloxane polymer is representative of the average formula of the M, D, T and Q siloxy units. For example, the M siloxy units may be independently selected within the formula (R¹_{3-xR}²ₓSiO_{1/2}), and the D siloxy units may be independently selected within the formula (R¹_{2-y}R²_{y}SiO_{2/2}). The subscripts, or mole fractions of the M, D, T and Q siloxy units in the organopolysiloxane polymer, are collective based on all M siloxy units, all D siloxy units, all T siloxy units, and all Q siloxy units, respectively. By way of example, the organopolysiloxane polymer may include M units corresponding to (R¹₃SiO_{1/2}), (R¹_{2R}²SiO_{1/2}), (R¹R²₂SiO_{1/2}), and/or (R²₃SiO_{1/2}), depending on whether subscript x is 0, 1, 2 or 3. Similarly, the organopolysiloxane polymer may include D units corresponding to (R¹₂SiO_{2/2}), (R¹R²SiO_{2/2}), and/or (R²₂SiO_{2/2}), depending on whether subscript y is 0, 1 or 2. Finally, the T units may be selected from the group consisting of (R¹₁SiO_{3/2}) and (R²SiO_{3/2}) and a combination thereof in the (A) organopolysiloxane polymer.

Each R¹ is independently selected from the group consisting of substituted or unsubstituted hydrocarbyl groups, which may be optionally interrupted by at least one heteroatom, a hydroxy group, hydrogen, and hydrolysable groups. The hydrolysable groups are preferably selected from alkoxy groups, acetate groups, lactate groups, or oximino groups. Each R¹ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e. g., a halogen atom, such as chlorine, fluorine, or bromine) , or a carbon atom within the chain of R¹ may be replaced with an atom other than carbon, i.e., R¹ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, sec-butyl, tert-butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e. g., halogenated) alkyl group. When R¹ is not an aryl group, each R¹ is typically saturated and not an alkenyl or alkynyl group.

In preferred embodiments, each R¹ may be independently selected from the group consisting of alkyl groups, aryl groups, a hydroxy group, hydrogen, and hydrolysable groups, more preferably, from the group consisting of alkyl groups, aryl groups, a hydroxy group, hydrogen, alkoxy groups, acetate groups, lactate groups, and oximino groups.

In more preferred embodiments, each R¹ is independently selected from the group consisting of alkyl groups, aryl groups, a hydroxy group, hydrogen, acetate groups, and alkoxy groups, more preferably, from the group consisting of methyl, ethyl, n-propyl, isopropyl, n-butyl, sec-butyl, isobutyl, tert. butyl, pentyl, hexyl, cyclohexyl, benzyl, phenyl, hydroxy, hydrogen, acetate groups, methoxy group, ethoxy group, n-propoxy group, isopropoxy group, n-butoxy group, isobutoxy group, sec-butoxy group, and t-butoxy group.

In particularly preferred embodiments, each R¹ is independently selected from the group consisting of methyl, ethyl, propyl, isopropyl, benzyl, phenyl, hydroxy, hydrogen, acetate groups, methoxy group, ethoxy group, n-propoxy group, and isopropoxy group.

Each R² is independently selected from aliphatically unsaturated groups, which may alternatively be referred to as ethylenic unsaturation. The ethylenic unsaturation in R² may be terminal. Each R² may be independently selected from the group consisting of an alkenyl group and an alkynyl group. "Alkenyl" means an acyclic, branched or unbranched, monovalent hydrocarbon group having one or more carbon-carbon double bonds. Alkenyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include vinyl groups, allyl groups, and hexenyl groups. "Alkynyl" means an acyclic, branched or unbranched, monovalent hydrocarbon group having one or more carbon-carbon triple bonds. Alkynyl groups may have 2 to 30 carbon atoms, alternatively 2 to 24 carbon atoms, alternatively 2 to 20 carbon atoms, alternatively 2 to 12 carbon atoms, alternatively 2 to 10 carbon atoms, and alternatively 2 to 6 carbon atoms. Specific examples thereof include ethynyl, propynyl, and butynyl groups. Various examples of R² include CH₂=CH-, CH₂=CHCH₂-, CH₂=CH(CH₂)₄-, CH₂=C(CH₃)CH₂-H₂C=C(CH₃)-, H₂C=C(CH₃)-, H₂C=C(CH₃)CH₂-H₂C=CHCH₂CH₂-, H₂C=CHCH₂CH₂CH₂-, HC≡C-, HC≡CCH₂-, HC≡CCH(CH₃)-, HC≡CC(CH₃)₂-, and HC≡CC(CH₃)₂CH₂-. Alternatively, each R² may be an alkenyl group. Alternatively, each R² may be independently selected from the group consisting of vinyl, allyl, and hexenyl; alternatively, vinyl and hexenyl. Preferably, each R² may be a vinyl group.

According to preferred embodiments, at least one of x, y, and z are 0, more preferably x, y, and z are 0.

The organopolysiloxane polymer may have one Q siloxy unit, per molecule. Alternatively, the organopolysiloxane polymer may have two Q siloxy units, alternatively three Q siloxy units, per molecule. The organopolysiloxane polymer may have a degree of polymerization (DP) of 5 to 400, alternatively from 10 to 200, alternatively from 14 to 160. The organopolysiloxane polymer (A) may have a viscosity at 25°C from greater than 0 mm²/s to less than 2,500,000 mm² /s, alternatively from greater than 0 mm²/s to less than 300,000 mm²/s, alternatively from greater than 0 mm²/s to less than 60,000 mm²/s. Preferably, the organopolysiloxane polymer may have a weight-average molecular weight molecular weight (M_{W}) of from greater than 0 to 400,000 g/mol, alternatively from 1,000 g/mol to 200,000 g/mol, alternatively from 1,500 g/mol to 100,000 g/mol. The viscosity of the organopolysiloxane polymer can be measured by BROOKFIELD viscometer. M_{W} of the (A) organopolysiloxane polymer can be determined via gel permeation chromatography employing a light-scattering detector, a refractive index detector, and a viscosity detector while employing polystyrene standards.

The component (A) may be one organopolysiloxane polymer. Alternatively, component (A) may be a combination of two or more different organopolysiloxane polymers. Methods of preparing (A) organopolysiloxane polymers are known in the art, for example, as described in U.S. Patent Application Publication 2002/0061998 to Cray, et al..

The at least one base catalyst (B) is preferably selected from the group consisting of alkali metal hydroxide, preferably sodium hydroxide, potassium hydroxide; in particular potassium hydroxide; alkaline earth metal hydroxide, preferably calcium hydroxide, magnesium hydroxide; aluminum hydroxide; boron hydroxide; ammonium hydroxide; tetraalkylammonium hydroxide, preferably quaternary ammonium hydroxide of type [NY₄]⁺OH⁻, wherein Y is alkyl, more preferably methyl, ethyl, propyl, iso-propyl, n-butyl, sec. butyl, tert. butyl, especially n-butyl, in particular, tetramethylammonium hydroxide, tetraethylammonium hydroxide; benzyl trimethyl ammonium hydroxide, preferably from quaternary ammonium hydroxide of the type [H₅C₆-CH₂-NY₃]⁺OH⁻, wherein Y is alkyl, more preferably methyl, ethyl, propyl, iso-propyl, n-butyl, sec. butyl, tert. butyl, especially n-butyl.

The at least one alcohol (C) is preferably selected from the group consisting of methanol, ethanol, n-propanol, iso-propanol, n-butanol, isobutanol, sec.-butanol, pentanol, hexanol, heptanol, octanol, nonanol, decanol, undecanol, preferably from the group consisting of methanol, ethanol, n-propanol, iso-propanol, n-butanol, isobutanol, sec.-butanol, more preferably n-propanol, iso-propanol, in particular iso-propanol.

In particularly preferred embodiments of the invention, the at least one base (B) is potassium hydroxide and the at least alcohol (C) is iso-propanol.

In principle, the weight ratio of at least one organopolysiloxane polymer (A), the at least one catalyst (B), the at least one alcohol (C) and the water (D) can be chosen freely adapted to particular aims. However, the weight ratio of the at least one alcohol (C) to the at least one catalyst (B) is preferably selected within the range of from >0.1-10 to 0.1, preferably of from 0.25-5.0 to 0.1, more preferably of from 0.5-2.0 to 0.1. The weight ratio of the at least one organopolysiloxane polymer (A) to the at least one alcohol (C) is preferably selected within the range of from 0.1-10 to 1, preferably of from 0.25-5 to 1, more preferably of from 0.5-2 to 1.

In preferred embodiments, the amount of water (D) used for the process for depolymerization of a silicone formulation according to the present invention is at least 1.0 wt.%, more preferably at least 2.0 wt.%, particularly preferably at least 5.0 wt.%, and at most 30.0 wt.%, more preferably at most 20.0 wt.%, particularly preferably at most 10.0 wt.%, based on the total weight of at least one organopolysiloxane polymer (A), the at least one base catalyst (B), the at least one alcohol (C) and the water (D).

For example, the amount of water (D) is preferably selected from 1.0 wt.% to 30.0 wt.-%, preferably from 2.0 wt.% to 20.0 wt.-%, more preferably from 5.0 wt.% to 10.0 wt.-%, based on the total weight of at least one organopolysiloxane polymer (A), the at least one base catalyst (B), the at least one alcohol (C) and the water (D).

Substantial amount of added water is necessary to increase yield of the depolymerization process according to the invention while increasing the amount of Si-OH generated in the process. For example, if the water (D) is used below 1.0 wt.%, based on the total weight of at least one organopolysiloxane polymer (A), the at least one base catalyst (B), the at least one alcohol (C) and the water (D), the yield of the depolymerization process reduces and Si-OH content of the obtained organopolysiloxane polymer (E1) is also relatively low. Also, if the amount of water is too high, the yield of the depolymerization process reduces.

In the present invention, the at least one organopolysiloxane polymer (A), the at least one base catalyst (B), the at least one alcohol (C) and the water (D) are preferably reacted for 0.1 h to 48 h, preferably for 1 h to 10 h, more preferably for 2 h to 5 h.

The above-describe process preferably yields a reaction mixture comprising at least one organopolysiloxane polymer (E1), which has a weight average molecular weight Mw of from 1,000 to 50,000 g/mol; at least one cyclic organosiloxane (E2), which has a weight average molecular weight Mw of <1,000 g/mol; and a solid phase (E3).

The at least one organopolysiloxane polymer (E1) and the at least one cyclic organosiloxane (E2) can be separated from the reaction mixture.

The organopolysiloxane polymer (E1) obtainable by the above-described depolymerization process has a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol. The organopolysiloxane polymer (E1) is preferably separated from the reaction mixture, preferably by distillation, for example through classic distillation or thin film evaporation. The at least one organopolysiloxane polymer (E1) preferably comprises at least one hydroxy group, more preferably at least two hydroxy groups, and is preferably usable as a telechelic polymer.

The cyclic organosiloxane (E2) obtainable by the above-described depolymerization process has a weight average molecular weight Mw of <1,000 g/mol, preferably <750 g/mol, more preferably <500 g/mol. The cyclic organosiloxane (E2) is preferably separated from the reaction mixture, preferably by distillation, for example through classic distillation or thin film evaporation The cyclic organosiloxane (E2) is acquired as the low boiling point fraction of the process.

Additionally, a solid phase (E3) can be separated from the reaction mixture, preferably by extraction, which solid phase (E3) contains crosslinking units of the formulated silicone; in other words, the proposed procedure allows for effective removing of crosslinking units from the reaction mixture of the above-described depolymerization process.

In preferred embodiments, after the reaction of at least one organopolysiloxane polymer (A) with at least one base catalyst (B), at least one alcohol (C) and water (D), the reaction mixture is filtered to remove the solid phase (E3). The liquid extract is then washed with water, preferably with an aqueous solution of a salt that increases the polarity of the phase and thus aids in phase separation. Washing is repeated until the aqueous phase is measured to have a pH > 5 and < 9, preferably > 6 and < 8. After the last washing the silicone phase is dried with a desiccant, preferably a carbonate, more preferably sodium bicarbonate. The desiccant is then removed through filtration. Subsequently the organopolysiloxane phase is subjected to further separation into low and high boiling fractions through e. g., distillation, preferably through thin film evaporation. Resulting low boiling phase is hereafter referred to as cyclic organosiloxane (E2), while high boiling phase is referred to as organopolysiloxane polymer (E1).

In preferred variants, the above-described depolymerization process yields 45 wt.% to 95 wt.%, preferably 45 wt.% to 85 wt.%, more preferably 65 wt.% to 80 wt.% of at least one organopolysiloxane polymer (E1) having a weight average molecular weight Mw of from 1,000 to 50,000 g/mol; 5 wt.% to 45 wt.%, preferably 15 wt.% to 45 wt.%, more preferably 20 wt.% to 35 wt.% of at least one cyclic organosiloxane (E2) having a weight average molecular weight Mw of <1,000 g/mol; and 0 wt.% to 50 wt.%, preferably 0 wt.% to 15 wt.%, more preferably 0 wt.% to 5 wt.% of solid phase (E3) containing crosslinking units of the formulated silicone, based on the total weight of the at least one organopolysiloxane polymer (A) depolymerized in the process.

The at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol, is particularly suited for the preparation of a curable composition comprising the at least one organopolysiloxane polymer (E1) or derivatives thereof and optionally other components, such as surface treated silica (F), surface treated calcium carbonate (G), at least one additional aminosilane (H), and optionally the other ingredients described herein. Said curable composition is preferably obtained by simply mixing said components, preferably in suitable dispersing units, e. g., a high-speed mixer.

The at least one organopolysiloxane polymer (E1) having a weight average molecular weight Mw of from 1,000 to 50,000 g/mol, preferably from 2,500 to 30,000 g/mol, more preferably from 4,000 to 15,000 g/mol, most preferably from 4,000 to 7,000 g/mol, can be further treated with at least one optionally substituted chlorosilane to yield an organopolysiloxane polymer (E1-1).

According to a preferred embodiment of the invention, the at least one optionally substituted chlorosilane is chlorosilane of formula (II)

R³₄₋ₚSiClₚ, (II)

wherein each R³ is independently selected from a hydrogen or substituted or unsubstituted hydrocarbyl group, and p is 1 to 4, preferably 1 to 3, more preferably 1 to 2, especially 2.

Each R³ is independently selected from a hydrogen or hydrocarbyl group, which may be substituted or unsubstituted. Each R³ independently may be linear, branched, cyclic, or combinations thereof. Cyclic hydrocarbyl groups encompass aryl groups as well as saturated or non-conjugated cyclic groups. Aryl groups may be monocyclic or polycyclic. One example of a combination of a linear and cyclic hydrocarbyl group is an aralkyl group. By "substituted", it is meant that one or more hydrogen atoms may be replaced with atoms other than hydrogen (e. g., a halogen atom, such as chlorine, fluorine, or bromine) , or a carbon atom within the chain of R³ may be replaced with an atom other than carbon, i.e., R³ may include one or more heteroatoms within the chain, such as oxygen, sulfur, nitrogen, or phosphorus. Hydrocarbyl groups may be exemplified by methyl, ethyl, n-propyl, isopropyl, n-butyl, isobutyl, tert. butyl, pentyl, hexyl, cyclohexyl, heptyl, octyl, nonyl, decyl, or a similar alkyl group; phenyl, tolyl, xylyl, naphthyl, or a similar aryl group; a benzyl, phenethyl, or a similar aralkyl group; and 3-chloropropyl, 2-bromoethyl, 3, 3, 3-trifluoropropyl, or a similar substituted (e. g., halogenated) alkyl group. When R³ is not an aryl group, each R³ is typically saturated and not an alkenyl or alkynyl group. Alternatively, each R³ may be an alkyl group.

Alternatively, each R³ may be independently selected from the group consisting of hydrogen, methyl, ethyl, propyl, isopropyl, butyl, isobutyl, tert. butyl, pentyl, hexyl, and cyclohexyl. Alternatively, each R³ may be independently selected from the group consisting of hydrogen, methyl, ethyl, n-propyl, and isopropyl. Alternatively, each R³ may be methyl.

According to a preferred embodiment of the invention, the at least one optionally substituted chlorosilane is selected from the group consisting of monochlorosilanes, dichlorosilanes, trichlorosilanes and tetrachlorosilanes.

More preferably, the optionally substituted chlorosilane is selected from the group consisting of silicon tetrachloride, chlorotris(trimethylsilyl)silane, dichlorotris(dimethylsilyl)silane, trichlorotris(methylsilyl)silane, methyltrichlorosilane, dichlordimethylsilane, chlorotrimethylsilane, chloro(chloromethyl)dimethylsilane, trichloro(chloromethyl)silane, dichloro(chloromethyl)methylsilane, dichloromethylvinylsilane, chloro(dimethyl)vinylsilane, trichlorovinylsilane, allyl(chloro)dimethylsilane, allyl(dichloro)methylsilane, allyl(trichloro)silane, chlorodimethylsilane, dichloromethylsilane, and trichlorosilane. More preferred chlorosilanes include monochlorosilanes and dichlorosilanes, in particular chlorotris(trimethylsilyl)silane, dichlorotris(dimethylsilyl)silane, dichlordimethylsilane, chlorotrimethylsilane, chloro(chloromethyl)dimethylsilane, dichloro(chloromethyl)methylsilane, dichloromethylvinylsilane, chloro(dimethyl)vinylsilane, allyl(chloro)dimethylsilane, allyl(dichloro)methylsilane, chlorodimethylsilane, dichloromethylsilane. Most preferred chlorosilanes include dichlorosilanes, in particular dichlorotris(dimethylsilyl)silane, dichlordimethylsilane, dichloro(chloromethyl)methylsilane, dichloromethylvinylsilane, allyl(dichloro)methylsilane, dichloromethylsilane.

According to a preferred embodiment of the invention, 80.0 wt.% to 99.9 wt.%, preferably 90.0 wt.% to 99.0 wt.%, more preferably 95.0 wt.% to 98.5 wt.%, of at least one organopolysiloxane polymer (E1) is reacted with 0.1 wt.% to 20.0 wt.%, preferably 1.0 wt.% to 10.0 wt.%, more preferably 1.5 wt.% to 5.0 wt.%, of at least one optionally substituted chlorosilane to prepare the organopolysiloxane polymer (E1-1). Preferably, the at least one optionally substituted chlorosilane is added in two or more, more preferably five or more, especially eight or more, separate portions in intervals of at least 1 min., preferably in intervals of at least 10 min., especially in intervals of at least 18 min..

According to a preferred embodiment of the invention, the at least one organopolysiloxane polymer (E1) is reacted with at least one optionally substituted chlorosilane at a temperature within the range of from 10 °C to 150 °C, preferably from 20 °C to 100 °C, more preferably from 40 °C to 60 °C, to produce the organopolysiloxane polymer (E1-1).

In addition, the at least one organopolysiloxane polymer (E1) is preferably reacted with at least one optionally substituted chlorosilane in the presence of at least one carbonate or hydrogen carbonate, preferably selected from alkali metal carbonate, alkali metal hydrogen carbonate, alkali earth metal carbonate, and alkali earth metal hydrogen carbonate, more preferably from NaHCO₃, Na₂CO₃, KHCO₃, and K₂CO₃.

In that context, 50.0 wt.% to 99.8 wt.%, preferably 80.0 wt.% to 99.0 wt.%, more preferably 90.0 wt.% to 98.2 wt.%, of at least one organopolysiloxane polymer (E1) is reacted with 0.1 wt.% to 20.0 wt.%, preferably 1.0 wt.% to 10.0 wt.%, more preferably 1.5 wt.% to 5.0 wt.%, of at least one optionally substituted chlorosilane in the presence of 0.1 wt.% to 30.0 wt.%, preferably 0.1 wt.% to 10.0 wt.%, more preferably 0.3 wt.% to 5.0 wt.%, of at least one carbonate or hydrogen carbonate.

According to a preferred embodiment of the invention, the at least one organopolysiloxane polymer (E1) is reacted with at least one optionally substituted chlorosilane in the presence of a chlorine scavenging agent, preferably ZnO and/or triethylamine, to produce the organopolysiloxane polymer (E1-1).

The at least one optionally substituted chlorosilane can be added to the at least one organopolysiloxane polymer (E1) one charge, batchwise or continuously. However, according to a preferred embodiment of the invention, the organopolysiloxane polymer (E1-1) is obtainable by reacting at least one organopolysiloxane polymer (E1) with at least one optionally substituted chlorosilane added in at least two separate portions, wherein at least one second portion of at least one optionally substituted chlorosilane is preferably added 1 min to 40 min, preferably 10 min to 30 min, more preferably 15 min to 25 min, after addition of a first portion of at least one optionally substituted chlorosilane.

In that context, preferably 0.01 wt.% to 5.0 wt.%, more preferably 0.1 wt.% to 2.5 wt.%, of at least one optionally substituted chlorosilane are added as at least one second portion to 0.001 wt.% to 10.0 wt.%, preferably 0.01 wt.% to 5.0 wt.%, more preferably 0.1 wt.% to 2.5 wt.%, of at least one optionally substituted chlorosilane.

According to a preferred embodiment, the organopolysiloxane polymer (E1-1) obtainable by the above-described process comprises at least one silanol group, preferably at least one terminal hydroxy group, more preferably at least two terminal hydroxy groups, which are preferably endcapped. α,ω-silanol terminated organopolysiloxane polymers (E1-1), preferably α,ω-hydroxy terminated organopolysiloxane polymers (E1-1), wherein said hydroxy is preferably bound to a silicon atom, α,ω-endcapped organopolysiloxane polymers (E1-1) are particularly favored.

According to another preferred embodiment, the organopolysiloxane polymer (E1-1) comprises at least one terminal alkyl group, preferably methyl group, more preferably at least two terminal alkyl groups, in particular at least two terminal methyl groups, which are preferably endcapped. α,ω-alkyl terminated organopolysiloxane polymers (E1-1), preferably α,ω-methyl terminated organopolysiloxane polymers (E1-1), wherein said alkyl or methyl group is preferably bound to a silicon atom, in particular α,ω-endcapped organopolysiloxane polymers (E1-1) are particularly favored.

In that context, the term endcapping (end group capping) describes the use of organopolysiloxane polymers (E1-1), comprising at least one silanol group, preferably at least one terminal hydroxy group, more preferably at least two terminal hydroxy groups, or at least one alkyl group, preferably at least one terminal alkyl - in particular methyl - group, together with a silane-based crosslinker which has hydrolyzable groups bound to the silicon atom. While the polyorganosiloxane and crosslinker can be present as separate components, both can also be reacted with each other to form a modified polyorganosiloxane which can then be used in a curable composition. This endcapping can be carried out optionally in the presence of a catalyst, whereby the catalyst is to mediate the endcapping selectively without simultaneously curing the polyorganosiloxane.

The cyclic organosiloxane (E2) having a weight average molecular weight Mw of <1,000 g/mol, preferably <750 g/mol, more preferably <500 g/mol can be further converted into an organopolysiloxane polymer (E2-1) by ring opening polymerization.

Whilst there is no specific intention to limit the mechanism of ring opening polymerization employed in the step a) ii) of this embodiment and whilst therefore ring opening polymerization of cyclic siloxane monomers by the anionic route, via basic catalysts is not strictly precluded, it is preferred herein for said polymerization to proceed by a cationic route, via acid catalysis. Broadly, any suitable acidic ring opening polymerization catalyst may be utilized herein and, equally, mixtures of catalysts may be employed. Both Lewis and Brønsted acids may be suitable in this context, but the latter are preferred as they tend to be effective at temperatures of less than 150°C and are usually effective at temperatures of from 50 to 100°C.

Examples of suitable Lewis acids include but are not limited to: BF₃; AlCl₃; t-BuCl/Et₂AlCl; Cl₂/BCl₃; AlBr₃; AlBr₃.TiCl₄; I2; SbCls; WCl₆; AlEt₂Cl; PF₅; VCl₄; AlEtCl₂; BF₃Et₂O; PCls; PCl₃; POCl₃; TiCl₆; and, SnCl₄.

Examples of Brønsted acid or proton acid type catalysts - which may optionally be disposed on solid, inorganic supports - include, but are not limited to: HCl; HBr; HI; H₂SO₄; HClO₄; para-toluenesulfonic acid; trifluoroacetic acid; and, perfluoroalkane sulfonic acids, such as trifluoromethane sulfonic acid (or triflic acid, CF₃SO₃H), C₂F₅SO₃H, C₄F₉SO₃H, C₅F₁₁SO₃H, C₆F₁₃SO₃H and C₈F₁₇SO₃H. The most preferred of these strong acids is trifluoromethane sulfonic acid (triflic acid, CF₃SO₃H).

The catalysts for said ring opening polymerization may usually be employed at a concentration of from 1 to 1000 ppm by weight based on the total weight of the cyclic siloxane monomers to be polymerized. Preferably from 5 to 750 ppm by weight are used, most preferably from 50 to 500 ppm. The catalytic amount may be reduced when the temperature at which the monomers and the catalyst are contacted is increased.

The ring opening polymerization can be carried out in the presence of at least one endcapping agent, preferably selected from MM, MDM or MDDM type silanes. According to a preferred embodiment, the endcapping agent is selected from MM type silanes including but not limited to methyl, vinyl, phenyl, hydroxy and hydrogen functional M units. In a more preferred embodiment endcapping agents are selected from hexamethyldisiloxane, pentamethyldisiloxane, pentamethyldisiloxanol, pentamethylvinyldisiloxane, pentamethylphenyldisiloxane, pentamethyldisiloxaneylpropanol, pentamethyldisiloxaneylpropoxypropanol, tetramethyldisiloxane, tetramethyldisiloxanediol, tetramethyldivinyldisiloxane, tetramethyldiphenyldisiloxane, tetramethyldisiloxanediylbispropanol, tetramethyldisiloxanediylbispropanediylbis(oxy))bispropanol. In a most preferred embodiment endcapping agents are selected from hexamethyldisiloxane, tetramethyldisiloxane, tetramethyldisiloxanediol. Depending on the endcapping agent, hydroxy-terminated or alkyl-terminated or hydrogen-terminated or allyl-terminated organopolysiloxane can be obtained. Preferably methyl-terminated organopolysiloxane (E2-1) can be obtained.

The ring opening polymerization may conveniently be carried out at a temperature in the range from 10 to 150 °C. Preferably, however, the temperature range is from 20 to 100 °C, as obviating high temperatures can limit the loss of volatile cyclic siloxanes from the reaction mixture due to their lower boiling point.

The process pressure is not critical. As such, the polymerization reaction can be run at sub-atmospheric, atmospheric, or super-atmospheric pressures but pressures at or above atmospheric pressure are preferred.

Importantly, the reaction should be performed under anhydrous conditions and in the absence of any compound having an active hydrogen atom. Exposure to atmospheric moisture may be avoided by providing the reaction vessel with an inert, dry gaseous blanket. Whilst dry nitrogen, helium and argon may be used as blanket gases, precaution should be used when common nitrogen gases are used as a blanket, because such nitrogen may not be dry enough on account of its susceptibility to moisture entrainment; the nitrogen may require an additional drying step before use herein.

The duration of the reaction is dependent on the time taken for the system to reach equilibrium. Equally, however, it is understood that the desired product can be obtained by stopping the equilibration at exactly the desired time: for example, the reaction can be monitored by analyzing viscosity over time or by analyzing monomer conversion using gas chromatography and the reaction stopped when the desired viscosity or monomer conversion is attained. These considerations aside, the polymerization reaction generally takes place for from 0.5 to 72 hours and more commonly from 1 to 30 or 1 to 20 hours. Acid catalysts present in the reaction mixture at the end of the polymerization reaction can easily be neutralized in order to stabilize the reaction product.

Upon completion of the ring opening polymerization, it is possible to remove any solid, suspended compounds by, for example, filtration, crossflow filtration or centrifugation. Further, the output of the polymerization may be worked up, using methods known in the art, to isolate and purify, for example, the hydroxy-functionalized polysiloxanes or alkyl-functionalized polysiloxanes. Mention in this regard may be made of extraction, evaporation, distillation and chromatography as suitable techniques.

According to a preferred embodiment, the organopolysiloxane polymer (E2-1) comprises at least one terminal hydroxy group, more preferably at least two terminal hydroxy groups, which are preferably endcapped. α,ω-hydroxy terminated organopolysiloxane polymers (E2-1), wherein said hydroxy is preferably bound to a silicon atom, in particular α,ω-endcapped organopolysiloxane polymers (E2-1) are particularly favored.

According to another preferred embodiment, the organopolysiloxane polymer (E2-1) comprises at least one terminal alkyl group, preferably methyl group, more preferably at least two terminal alkyl groups, in particular at least two terminal methyl groups, which are preferably endcapped. α,ω-alkyl terminated organopolysiloxane polymers (E2-1), preferably α,ω-methyl terminated organopolysiloxane polymers (E2-1), wherein said alkyl or methyl group is preferably bound to a silicon atom, in particular α,ω-endcapped organopolysiloxane polymers (E2-1) are particularly favored.

### (ii) Second embodiment of the preparation of recycled organopolysiloxane and/or cyclic siloxane compound

According to another preferred embodiment, the recycled organopolysiloxane and/or cyclic siloxane compound is obtainable by a process for the depolymerization of a silicone formulation comprising (A) at least one organopolysiloxane polymer, wherein (A) the at least one organopolysiloxane is depolymerized in the presence of
(a) at least one inorganic hydroxide;
(b) at least one ammonium salt and/or at least one phosphonium salt having a pH value of from 5.0 to 9.0; and
(c) at least one solvent.

As used herein the term pH value (the pH value of an aqueous solution or dispersion in water) represents the negative log₁₀ aqueous hydronium ion concentration [H₃O]⁺ and is electrometrically determined with a pH meter equipped with an appropriate electrode system in accordance with OECD guideline (no. 122) "Determination of pH Acidity and Alkalinity", using a concentration of 0.026 M solution of Tetraalkylammonium salt.

The inorganic hydroxide can be selected freely, especially in view of particular objectives to be met. However, at least one inorganic hydroxide is preferably selected from the group consisting of metal hydroxide, wherein alkali hydroxides, especially sodium hydroxide and potassium hydroxide and in particular potassium hydroxide is favored.

The ammonium salt and/or phosphonium salt having a pH value of from 5.0 to 9.0 can also be selected freely, especially in view of particular objectives to be met. According to preferred embodiments of the invention, the ammonium salt and/or phosphonium salt has a pH value of from 5.5 to 8.0, more preferably 6.0 to 8.0.

At least one ammonium salt and/or phosphonium salt is preferably selected from the group consisting of tetraalkylammonium compounds.

According to a particular preferred embodiment of the invention, quaternary ammonium compounds of the type [NY₄]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

According to another particular preferred embodiment of the invention, benzyl trimethyl ammonium salts, preferably from quaternary ammonium compounds of the type [H₅C₆-CH₂-NY₃]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

According to a further particular preferred embodiment of the invention, phosphonium salts, preferably from the type [PY₄]⁺X⁻ are used, wherein Y is alkyl, more preferably methyl, ethyl, propyl, iso-propyl, n-butyl, sec. butyl, tert. butyl, especially n-butyl, X is chlorine, bromine, iodine, nitrate, or hydrogen sulfate, preferably chlorine, bromine, or iodine, more preferably chlorine or bromine, in particular bromine.

The solvent can also be selected freely, especially in view of particular objectives to be met. However, at least one solvent is preferably selected from the group consisting of alkanes, alkenes, alkynes, alcohols, benzene, and aromatics optionally with aliphatic and/or aromatic substituents, carboxylic acid esters, ethers, tetra alkyl silane, carbon disulfide, halogenated hydrocarbons and perfluorinated hydrocarbons. At least one solvent is preferably selected from the group consisting of n-pentane, n-hexane, n-heptane, n-octane, cyclopentane, n-nonane, n-decane, n-dodecane, cyclohexane, hex-1-ene, cis/trans decaline, cyclohexene, 1,4-dioxane, carbon tetrachloride, p-xylene, benzene, toluene, styrene, pertetrachloroethene, carbon disulfide, tetraline, thiophene, furane, trichlorethene, diethyl ether, anisol, chloroform, chlorobenzene, aniline, 1,1,1-trichloroethane, triethylene glycol dimethyl ether, tetrahydrofuran, benzo[b]pyridine, dichloromethane, pyridine, acetaldehyde, ethylacetate, acetic acid, tetrahydrofuran, dichloromethane, n-butanol and isopropanol; especially from toluene, tetrahydrofuran and isopropanol. According to a particularly preferred embodiment, the solvent is selected from toluene or tetrahydrofuran.

According to a preferred embodiment of the invention, the solvent comprises from 0 to 20 wt.%, more preferably from 0 to 10 wt.%, even more preferably from 0 to 5 wt.% of water based on the total weight of said at least one organopolysiloxane, said at least one inorganic hydroxide, said at least one ammonium salt and/or said at least one phosphonium salt, and said at least one solvent. Higher water content results in reduced yields. In addition, use of less polar solvent compared to water increases solubility of the starting materials including organopolysiloxane and catalyst as well as reaction products including cyclic siloxanes.

According to a preferred embodiment of the invention, at least one solvent has a relative dielectric constant (k), measured at 20°C, of within the range of from 1 to 25, more preferably from 2 to 20.

The relative dielectric constant (k) is defined as the ratio of the permittivity of the substance (ε) to the permittivity of free space (ε₀). It can be written as k=ε/ε₀. ε₀=8.854187817 A*s/(V*m). The relative dielectric constant k is a unitless, dimensionless quantity because it is the ratio of two like entities. In the parallel plate method, the material under test is placed between two electrodes forming a capacitor and the capacitance are then measured. Using the measured capacitance and the thickness of the sample the relative dielectric constant is determined.

Particularly preferred solvents for the present invention include n-pentane (1.844), n-hexane (1.89), n-heptane (1.942), n-octane (1.962), cyclopentane (1.965), n-nonane (1.972), n-decane (1.991), n-dodecane (2.01), cyclohexane (2.023), hex-1-ene (2.06), cis/trans decaline (2.11), cyclohexene (2.22), 1,4-dioxane (2.24), carbon tetrachloride (2.242), p-xylene (2.269), benzene (2.284), toluene (2.385), styrene (2.431), pertetrachloroethene (2.5), carbon disulfide (2.63), tetraline (2.66), thiophene (2.76), furane (2.95), trichlorethene (3.4), diethyl ether (4.34), anisol (4.5), chloroform (4.806), chlorobenzene (5.641), aniline (7.07), 1,1,1-trichloroethane (7.2), triethylene glycol dimethyl ether (7.5), tetrahydrofuran (7.52), benzo[b]pyridine (8.8), dichloromethane (9.08), pyridine (13.23), acetaldehyde (14.8), ethylacetate (6.0), acetic acid (6.2), tetrahydrofuran (THF) (7.5), dichloromethane (9.1), n-butanol (18), isopropanol (IPA) (18), wherein the relative dielectric constant (k) of said solvents, determined at 20°C, is indicated in brackets.

The depolymerization of various types of silicone polymers can be achieved by treatment of the polymeric material with a catalytic amount of a mixture comprising at least one inorganic hydroxide and at least one ammonium salt and/or at least one phosphonium salt in at least one solvent.

The depolymerization is preferably carried out at a temperature within the range of 15°C to 150°C, preferably within the range of 50°C to 120 °C, more preferably within the range of 70°C to 80°C.

According to a preferred embodiment, the time of the depolymerization is within the range of from 0.1 h to 48 h, preferably within the range of from 0.5 h to 24 h, more preferably within the range of from 4 h to 6 h.

According to a preferred embodiment of the invention, the organopolysiloxane which is depolymerized by the process of the invention has unit formula (I) as defined for the "First embodiment of the preparation of recycled organopolysiloxanes".

Preferably, at least one organopolysiloxane is a homopolymer or a copolymer and preferably comprises more than 50 wt.-%, more preferably more than 60 wt.%, even more preferably more than 75 wt.%, most preferably more than 90 wt.%, of poly alkyl siloxane-repeating units, more preferably of poly C₁-C₄ alkyl siloxane-repeating units, especially of poly methyl siloxane-repeating units.

Cured organopolysiloxane may also be depolymerized by the method of the present invention, wherein use of temperature above 50 °C, in particular of above 70 °C has proven of particular advantage in that context.

The ratio of the at least one inorganic hydroxide to the at least one organopolysiloxane to be depolymerized is preferably selected within the range of from 0.1 parts by weight to 10.0 parts by weight, most preferably within the range from 0.8 parts by weight to 4.0 parts by weight, per 100 parts by weight of the at least one organopolysiloxane to be depolymerized.

The ratio of the at least one ammonium salt and/or the at least one phosphonium salt to the at least one organopolysiloxane to be depolymerized is preferably selected within the range of from 0.4 parts by weight to 25.0 parts by weight, most preferably within the range from 4.3 parts by weight to 11.0 parts by weight, per 100 parts by weight of the at least one organopolysiloxane to be depolymerized.

The ratio of the at least one solvent to the at least one organopolysiloxane to be depolymerized is preferably selected within the range of from 50.0 parts by weight to 2000.0 parts by weight, most preferably within the range from 400.0 parts by weight to 1000.0 parts by weight, per 100 parts by weight of the at least one organopolysiloxane to be depolymerized.

The depolymerization of at least one organopolysiloxane is preferably carried out in the presence of 0.1 to 10.0 parts by weight of at least one inorganic hydroxide, 0.4 to 25.0 parts by weight of at least one ammonium salt and/or said at least one phosphonium salt; and 50.0 to 2000.0 parts by weight of at least one solvent, per 100 parts by weight of the at least one organopolysiloxane to be depolymerized.

According to a preferred embodiment, the molar ratio between said at least one inorganic hydroxide and said at least one ammonium salt and/or phosphonium salt is within 0.8:1.2 to 1.0:1.2, more preferably from 0.9:1.1 to 1.1:0.9.

Preferably, at least one organopolysiloxane is depolymerized into a composition comprising at least one cyclic siloxane monomer, preferably selected from the group consisting of hexamethylcyclotrisiloxane (D3), octamethylcyclotetrasiloxane (D4), decamethylcyclopentasiloxane (D5), dodecamethylcyclohexasiloxane (D6), tetradecamethylcycloheptasiloxane (D7), more preferably selected from the group consisting of octamethylcyclotetrasiloxane, decamethylcyclopentasiloxane and dodecamethylcyclohexasiloxane, in particular selected from the group consisting of octamethylcyclotetrasiloxane and decamethylcyclopentasilioxane.

The obtained cyclic siloxanes can be converted into organopolysiloxanes by ring opening polymerization. The description about the ring opening polymerization process in the "First embodiment of the preparation of recycled organopolysiloxanes" also applies here.

According to a preferred embodiment, the organopolysiloxane polymers obtained by ROP comprises at least one terminal hydroxy group, more preferably at least two terminal hydroxy groups, which are preferably endcapped. α,ω-hydroxy terminated organopolysiloxane polymers, wherein said hydroxy is preferably bound to a silicon atom, in particular α,ω-endcapped organopolysiloxane polymers are particularly favored.

According to another preferred embodiment, the organopolysiloxane polymers obtained by ROP comprise at least one terminal alkyl group, preferably methyl group, more preferably at least two terminal alkyl groups, in particular at least two terminal methyl groups, which are preferably endcapped. α,ω-alkyl terminated organopolysiloxane polymers, preferably α,ω-methyl terminated organopolysiloxane polymers, wherein said alkyl or methyl group is preferably bound to a silicon atom, in particular α,ω-endcapped organopolysiloxane polymers are particularly favored.

### Curable composition

The present invention also provides a curable composition comprising at least one organopolysiloxane derived from a recycled organopolysiloxane and/or cyclic siloxane compound. The curable composition can comprise said organopolysiloxane derived from a recycled organopolysiloxane and/or cyclic siloxane componud as a main polymer of the composition or as an additive, such as plasticizer.

In particularly preferred embodiments, the curable composition comprises at least one organopolysiloxane having at least two terminal hydroxy groups or alkyl groups bound to a silicon atom.

In a preferred embodiment, the curable composition comprises or consists essentially of:
(I) at least one recycled organopolysiloxane;
(II) optionally, at least one adhesion promoter;
(III) optionally, at least one curing catalyst.

When the organopolysiloxane is used as main (reactive) polymer of the composition, the organopolysiloxane preferably has at least two terminal hydroxy groups. In various embodiments, the curable compositions contain the organopolysiloxane polymer preferably having at least two terminal hydroxy groups and optionally at least one non-recycled organopolysiloxane in an amount of 20 to 97 % by weight, particularly preferably in an amount of 25 to 70 % by weight, based in each case on the total weight of the composition. If a mixture of organopolysiloxanes is used, the amounts relate to the total amount of organopolysiloxanes in the composition.

The curable composition can comprise at least one additional organopolysiloxane which is not derived from a recycled organopolysiloxane and/or cyclic siloxane compound, i.e., non-recycled organopolysiloxane.

In preferred embodiments, the curable composition comprises at least 20 wt.%, more preferably at least 30 wt.%, most preferably at least 50 wt.%, of at least one organopolysiloxane derived from a recycled organopolysiloxane and/or cyclic siloxane compound, based on the total weight of the organopolysiloxanes in the curable composition. In preferred embodiments, at least 20 %, preferably at least 30 %, more preferably at least 50 %, most preferably 100 %, of its siloxane repeating units are derived from a recycled organopolysiloxane and/or cyclic siloxane compound.

The curable compositions preferably contain as component (II) at least one adhesion promoter. The curable compositions can contain in addition up to about 20 % by weight of conventional adhesion promoters (tackifiers). Suitable as adhesion promoters are, for example, resins, terpene oligomers, coumarone/indene resins, aliphatic petrochemical resins, and modified phenol resins. Suitable within the context of the present invention are, for example, hydrocarbon resins, as can be obtained by polymerization of terpenes, primarily *α*- or *β*-pinene, dipentene, or limonene. These monomers are generally polymerized cationically with initiation using Friedel-Crafts catalysts. The terpene resins also include, for example, copolymers of terpenes and other monomers, for example, styrene, *α-*methylstyrene, isoprene, and the like. The aforesaid resins are used, for example, as adhesion promoters for contact adhesives and coating materials. Also suitable are terpene-phenol resins, which are prepared by the acid-catalyzed addition of phenols to terpenes or rosin. Terpene-phenol resins are soluble in most organic solvents and oils and miscible with other resins, waxes, and natural rubber. Also suitable as an additive in the aforesaid sense within the context of the present invention are the rosin resins and derivatives thereof, for example, the esters thereof.

Also suitable are silane adhesion promoters, particularly alkoxysilanes, with a (further) functional group such as, e. g., an amino group, a mercapto group, an epoxy group, a carboxyl group, a vinyl group, an isocyanate group, an isocyanurate group, or a halogen. Examples are γ-mercaptopropyltrimethoxysilane, γ-mercaptopropyltriethoxysilane, γ-mercaptopropylmethyldimethoxysilane, γ-glycidoxypropyltrimethoxysilane, γ-glycidoxypropyltriethoxysilane, γ-glycidoxypropylmethyldimethoxysilane, β-carboxyethyltriethoxysilane, β-carboxyethylphenylbis-(2-methoxyethoxy)silane, N-β-(carboxymethyl)aminoethyl-γ-aminopropyltrimethoxysilane, vinyltrimethoxysilane, vinyltriethoxysilane, γ-acroyloxypropylmethyltriethoxysilane, γ-isocyanatopropyltrimethoxysilane, γ-isocyanatopropyltriethoxysilane, γ-isocyanatopropylmethyldiethoxysilane, γ-isocyanatopropylmethyldimethoxysilane, tris(trimethoxysilyl)isocyanurate, and γ-chloropropyltrimethoxysilane.

It is furthermore possible to include further adhesion promoters aside from the compounds of formula (II), with said adhesion promoters being aminosilanes. Said aminosilanes may be selected from 3-aminopropyltrimethoxysilane, 3-aminopropyltriethoxysilane, aminomethyltrimethoxysilane, aminomethyltriethoxysilane, 3-aminopropylmethyldiethoxysilane, (N-2-aminoethyl)-3-aminopropyltrimethoxysilane, (N-2-aminoethyl)-3-aminopropyltriethoxysilane, diethylenetriaminopropyltrimethoxysilane, phenylaminomethyltrimethoxysilane, (N-2-aminoethyl)-3-aminopropylmethyldimethoxysilane, 3-(N-phenylamino)propyltrimethoxysilane, 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane, 4-amino-3,3-dimetylbuthyltriethoxysilane, bis(3-trimethoxysilyl)propylamine, bis(3-triethoxysilyl)propylamin, and mixtures thereof, particularly preferably of 3-aminopropyltrimethoxysilane, 3-aminopropyltriethoxysilane, aminomethyltrimethoxysilane, aminomethyltriethoxysilane, 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamine, 4-amino-3,3-dimethylbutyltrimethoxysilane and 4-amino-3,3-dimetylbuthyltriethoxysilane.

In various embodiments, the compositions of the invention further comprise at least one aminosilane as described above, in particular one of the tertiary aminosilanes. "Tertiary aminosilane", as used herein, refers to an aminosilane wherein the nitrogen atom of the amino group is covalently linked to three non-hydrogen residues.

In various embodiments, the aminosilane is selected from the group consisting of 3-piperazinylpropylmethyldimethoxysilane, 3-(N,N-dimethylaminopropyl)aminopropylmethyldimethoxysilane, tri[(3-triethoxysilyl)propyl]amine, tri[(3-trimethoxysilyl)propyl]amine, and the oligomers thereof, 3-(N,N-dimethylamino)propyltrimethoxysilane, 3-(N,N-dimethylamino)-propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, bis(3-trimethoxysilyl)propylamine, bis(3-triethoxysilyl)propylamin, and mixtures thereof, particularly preferably of 3-(N,N-dimethylamino)propyltrimethoxysilane, 3-(N,N-dimethylamino)propyltriethoxysilane, (N,N-dimethylamino)methyltrimethoxysilane, (N,N-dimethylamino)methyltriethoxysilane, 3-(N,N-diethylamino)propyltrimethoxysilane, 3-(N,N-diethylamino)propyltriethoxysilane, (N,N-diethylamino)methyltrimethoxysilane, (N,N-diethylamino)methyltriethoxysilane, 4-amino-3,3-dimethylbutyltrimethoxysilane and 4-amino-3,3-dimetylbuthyltriethoxysilane.

The curable compositions can contain at least one capped adhesion promoter of formula (PII):

BB-R¹¹⁰-SiR¹²⁰_{qq}(OR¹³⁰)_{3-qq} (PII)

wherein
R¹¹⁰ is an alkylene group, optionally interrupted by a heteroatom, such as O, N, S or Si, preferably C₁-C₁₀ alkylene, more preferably C₁ or C₃ alkylene;
each R¹²⁰ is independently selected from the group consisting of hydrogen, halogen, amino, a substituted or unsubstituted alkyl, alkenyl, alkynyl, cycloaliphatic, aryl, heteroaryl, and heteroalicyclic group or a combination thereof;
each R¹³⁰ is independently selected from the group consisting of a substituted or unsubstituted alkyl, alkenyl, alkynyl, or acyl group;
qq independently stands for 0, 1, or 2; and
BB is a nitrogen-containing group selected from the group of formula (P6), (P7) or (P8)

   -N=C(R¹⁴⁰)₂ (P6)

   -NR^{140a}-CR^{140b}=C(R^{140c)}₂ (P7) 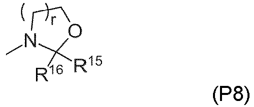
wherein each R¹⁴⁰, R^{140a}, R^{140b}, R^{140c}, R¹⁵ and R¹⁶ is independently selected from the group consisting of hydrogen, a substituted or unsubstituted alkyl, alkenyl, alkynyl, cycloaliphatic, aryl, heteroaryl, and heteroalicyclic group or a combination thereof; and
r is 1, 2, 3 or 4.

If R¹¹⁰ is an alkylene group interrupted by a heteroatom, such as O, N, S or Si, it is understood that N may be NR^{130a} and Si may be Si(R^{130a})₂, with each R^{130a} independently being selected from the group consisting of hydrogen, alkyl, alkenyl, alkynyl, cycloaliphatic, aryl, heteroaryl, and heteroalicyclic group or a combination thereof.

The terms "blocked" and "capped" in relation to the compound of formula (PII) are used interchangeably herein. Furthermore, the compound of formula (PII) is herein referred to as a blocked/capped adhesion promoter.

In various embodiments, each R¹²⁰ and R¹³⁰ is independently selected from methyl and ethyl, preferably each R¹³⁰ is ethyl.

In various embodiments, R¹³⁰ may be alkyl or substituted alkyl, such as amino alkyl. Preferred (amino)alkyl groups are C₁-C₆ alkyl groups, preferably linear alkyl groups, such as ethyl, n-propyl, n-butyl and n-pentyl optionally with a terminal amino, alkylamino or dialkylamino group, such as a N,N-di(C₁-C₄ alkyl)amino group, such as a N,N-dimethyl- or N,N-diethylamino group.

In various embodiments, in formula (P6) one R¹⁴⁰ is hydrogen or methyl, preferably hydrogen, and the other R¹⁴⁰ is an unsubstituted alkyl group having 1 to 10 carbon atoms, preferably having 1 to 4 carbon atoms, such as, for example, isobutyl or methyl, or an unsubstituted aryl group, preferably phenyl.

In various embodiments, in formula (P7) R^{140a} and R^{140b} and one R1^{40c} are hydrogen or methyl, preferably hydrogen, and the other R^{140c} is an unsubstituted alkyl group having 1 to 10 carbon atoms, preferably having 1 to 4 carbon atoms, or an unsubstituted aryl group, preferably phenyl.

In various embodiments, R¹⁵ and R¹⁶ in formula (P8) are hydrogen.

In formula (P8), r is preferably 1 or 2, more preferably 1.

In various embodiments, the capped adhesion promoter is a ketimine of formula (PII) with qq being 0, R¹¹⁰ being methylene or propylene, preferably propylene, each R¹³⁰ being methyl or ethyl, preferably ethyl, and BB being a group of formula (P6), wherein
(i) one R¹⁴⁰ is methyl and the second R¹⁴⁰ is isobutyl or methyl; or
(ii) one R¹⁴⁰ is hydrogen and the second R¹⁴⁰ is phenyl.

The curable compositions can contain the capped adhesion promoter preferably in an amount of about 0.1 to about 5 % by weight, preferably 0.5 to 2 % by weight, based in each case on the total weight of the composition. If a mixture of capped adhesion promoters is used, the amounts refer to the total amount of such capped adhesion promoters in the composition.

"Blocked", as used herein in connection with the compounds of formula (PII), refers to the fact that said compounds are derivatized such that the active compound is only released upon contact with water and/or oxygen.

The curable compositions can comprise as component (III) at least one curing catalyst.

In various embodiments, the curing catalyst may be a tin compound, preferably an organotin compound or an inorganic tin salt. Tin in these tin compounds is preferably bivalent or tetravalent. Component (III) is added to the composition particularly as a crosslinking catalyst. Suitable inorganic tin salts are, for example, tin(II) chloride and tin(IV) chloride. Organotin compounds (tin organyles) are used preferably as the tin compounds, however. Suitable organotin compounds are, for example, the 1,3-dicarbonyl compounds of bivalent or tetravalent tin, for example, the acetylacetonates such as di(n-butyl)tin(IV) di(acetylacetonate), di(n-octyl)tin(IV) di(acetylacetonate), (n-octyl)(n-butyl)tin(IV) di(acetylacetonate); the dialkyl tin(IV) dicarboxylates, for example, di-n-butyltin dilaurate, di-n-butyltin maleate, di-n-butyltin diacetate, di-n-octyltin dilaurate, di-n-octyltin diacetate, or the corresponding dialkoxylates, for example, di-n-butyltin dimethoxide; oxides of tetravalent tin, for example, dialkyltin oxides, such as, for example, di-n-butyltin oxide and di-n-octyltin oxide; and the tin(II) carboxylates such as tin(II) octoate or tin(II) phenolate.

Suitable furthermore are tin compounds of ethyl silicate, dimethyl maleate, diethyl maleate, dioctyl maleate, dimethyl phthalate, diethyl phthalate, dioctyl phthalate, such as, for example, di(n-butyl)tin(IV) di(methyl maleate), di(n-butyl)tin(IV) di(butyl maleate), di(n-octyl)tin(IV) di(methyl maleate), di(n-octyl)tin(IV) di(butyl maleate), di(n-octyl)tin(IV) di(isooctyl maleate); and di(n-butyl)tin(IV) sulfide, (n-butyl)₂Sn(SCH₂COO), (n-octyl)₂Sn(SCH₂COO), (n-octyl)₂Sn(SCH₂CH₂COO), (n-octyl)₂Sn(SCH₂CH₂COOCH₂CH₂OCOCH₂S), (n-butyl)₂-Sn(SCH₂COO-i-C₈H₁₇)₂, (n-octyl)₂Sn(SCH₂COO-i-C₈H₁₇)₂, and (n-octyl)₂Sn(SCH₂COO-n-C₈H₁₇)₂.

Preferably, the tin compound is selected from 1,3-dicarbonyl compounds of bivalent or tetravalent tin, the dialkyltin(IV) dicarboxylates, the dialkyltin(IV) dialkoxylates, the dialkyltin(IV) oxides, the tin(II) carboxylates, and mixtures thereof.

Particularly preferably, the tin compound is a dialkyltin(IV) dicarboxylate, particularly di-n-butyltin dilaurate or di-n-octyltin dilaurate.

Additionally or alternatively, other metal-based condensation catalysts may be used, including, without limitation, compounds of titanium such as organotitanates or chelate complexes, cerium compounds, zirconium compounds, molybdenum compounds, manganese compounds, copper compounds, aluminum compounds, or zinc compounds or their salts, alkoxylates, chelate complexes, or catalytically active compounds of the main groups or salts of bismuth, lithium, strontium, or boron.

Further suitable (tin-free) curing catalysts are, for example, organometallic compounds of iron, particularly the 1,3-dicarbonyl compounds of iron such as, e. g., iron(III) acetylacetonate.

Boron halides such as boron trifluoride, boron trichloride, boron tribromide, boron triiodide, or mixtures of boron halides can also be used as curing catalysts. Particularly preferred are boron trifluoride complexes such as, e. g., boron trifluoride diethyl etherate, which as liquids are easier to handle than gaseous boron halides.

Further, amines, nitrogen heterocycles, and guanidine derivatives are suitable in general for catalysis. An especially suitable catalyst from this group is 1,8-diazabicyclo[5.4.0]undec-7-ene (DBU).

Titanium, aluminum, and zirconium compounds, or mixtures of one or more catalysts from one or more of the just mentioned groups may also be used as catalysts.

Suitable as titanium catalysts are compounds that have hydroxy groups and/or substituted or unsubstituted alkoxy groups, therefore titanium alkoxides of the general formula

Ti(OR^{z})₄,

where R^{z} is an organic group, preferably a substituted or unsubstituted hydrocarbon group having 1 to 20 C atoms, and the 4 alkoxy groups -OR^{z} are identical or different. Further, one or more of the -OR^{z} groups can be replaced by acyloxy groups -OCOR^{z}.

Likewise suitable as titanium catalysts are titanium alkoxides in which one or more alkoxy groups are replaced by a hydroxy group or halogen atoms.

Further, titanium chelate complexes can be used.

Aluminum catalysts can also be used as curing catalysts, e. g., aluminum alkoxides Al(OR^{z})₃, where R^{z} has the above meaning; i.e., it is an organic group, preferably a substituted or unsubstituted hydrocarbon group having 1 to 20 C atoms and the three R^{z} groups are identical or different. In the case of aluminum alkoxides as well, one or more of the alkoxy groups can be replaced by acyloxy groups -OC(O)R^{z}.

Further, aluminum alkoxides can be used in which one or more alkoxy groups are replaced by a hydroxy group or halogen atoms.

Of the described aluminum catalysts, the pure aluminum alcoholates are preferred in regard to their stability to moisture and the curability of the mixtures to which they are added. In addition, aluminum chelate complexes are preferred.

Suitable as zirconium catalysts are, e. g., tetramethoxyzirconium or tetraethoxyzirconium.

Diisopropoxyzirconium bis(ethyl acetoacetate), triisopropoxyzirconium (ethyl acetoacetate), and isopropoxyzirconium tris(ethyl acetoacetate) are used with very particular preference.

Further, zirconium acylates can be used, for example.

Halogenated zirconium catalysts can also be used.

Further, zirconium chelate complexes can also be used.

In addition, carboxylic acid salts of metals or also a mixture of a number of such salts can be employed as curing catalysts, whereby these are selected from the carboxylates of the following metals: calcium, vanadium, iron, zinc, titanium, potassium, barium, manganese, nickel, cobalt, and/or zirconium.

Of the carboxylates, the calcium, vanadium, iron, zinc, titanium, potassium, barium, manganese, and zirconium carboxylates are preferred, because they exhibit a high activity. Calcium, vanadium, iron, zinc, titanium, and zirconium carboxylates are particularly preferred. Iron and titanium carboxylates are very particularly preferred.

The curable compositions contain the curing catalyst preferably in an amount of from about 0.05 to 2 % by weight, preferably 0.1 to 1.5 or 0.1 to 0.5 % by weight, based in each case on the total weight of the composition. If a mixture of different catalysts is used, the amounts refer to the total amount in the composition.

The compositions of the invention preferably crosslink in the presence of moisture and in so doing cure with the formation of Si-O-Si bonds.

In another embodiment, the silicone composition cures via an addition (hydrosilylation) reaction between vinyl-functional polysiloxanes and silicon-hydride-functional polysiloxanes in the presence of a platinum-group metal catalyst, such as a platinum or rhodium catalyst. The addition cure proceeds without the generation of by-products and may occur at room temperature or under elevated temperatures, depending on formulation.

In another embodiment, the silicone composition cures via a free radical mechanism initiated by an organic peroxide. Upon heating to a temperature sufficient to decompose the peroxide, free radicals are generated that initiate crosslinking of reactive groups on the silicone polymer chains. This embodiment is suitable for high-temperature vulcanizing (HTV) silicone elastomers.

In another embodiment, the silicone composition cures upon exposure to ultraviolet (UV) radiation. The silicone polymer may comprise (meth)acrylate or other photoreactive functional groups, and curing is initiated by photoinitiators activated by UV light. The UV-initiated curing may be performed at ambient conditions.

In another preferred embodiment, the curable composition comprises at least one organopolysiloxane derived from a recycled organopolysiloxane and/or cyclic siloxane compound as plasticizer. When the organopolysiloxane is used as plasticizer in the composition, the organopolysiloxane preferably has at least two terminal alkyl groups, more preferably methyl groups.

The curable compositions can contain at least one plasticizer preferably in an amount of 1 to 50 % by weight, preferably in an amount of 10 to 40 % by weight, particularly preferably in an amount of 20 to 30 % by weight, based in each case on the total weight of the composition. If a mixture of plasticizers is used, the amounts refer to the total amount of plasticizers in the composition.

The curable compositions can contain, apart from the components (I), optional (II) and optional (III), one or more components that can be used to selectively influence specific properties of the curable composition and/or the cured product.

These other components can be selected, for example, from the group comprising plasticizers, stabilizers, antioxidants, fillers, reactive diluents, drying agents, UV stabilizers, rheological aids, and/or solvents. Of particular importance are typically plasticizers, fillers, and stabilizers, comprising antioxidants and UV stabilizers.

Preferably, the curable compositions therefore contain at least one further component.

It is conceivable that the viscosity of the curable composition is too high for certain applications. It can then be reduced in a simple and expedient way usually by using a reactive diluent, without any signs of demixing (e. g., plasticizer migration) occurring in the cured mass.

Preferably, the reactive diluent has at least one functional group which after application reacts, e. g., with moisture or atmospheric oxygen. Examples of groups of this type are silyl groups, isocyanate groups, vinylically unsaturated groups, and polyunsaturated systems.

All compounds that can be mixed with the other components with a reduction in viscosity and have at least one group reactive with the polymer can be used as reactive diluents.

The viscosity of the reactive diluent is preferably less than 20,000 mPas, particularly preferably about 0.1 to 6000 mPas, very particularly preferably 1 to 1000 mPas (Brookfield RVT, 23°C, spindle 7, 10 rpm).

The following substances, for example, can be used as reactive diluents: polyalkylene glycols reacted with isocyanatosilanes (e. g., Synalox 100-50B, DOW), carbamatopropyltrimethoxysilane, alkyltrimethoxysilane, alkyltriethoxysilane, such as methyltrimethoxysilane, methyltriethoxysilane, and vinyltrimethoxysilane (XL 10, Wacker), vinyltriethoxysilane, phenyltrimethoxysilane, phenyltriethoxysilane, octyltrimethoxysilane, tetraethoxysilane, vinyldimethoxymethylsilane (XL12, Wacker), vinyltriethoxysilane (GF56, Wacker), vinyltriacetoxysilane (GF62, Wacker), isooctyltrimethoxysilane (IO Trimethoxy), isooctyltriethoxysilane (IO Triethoxy, Wacker), N-trimethoxysilylmethyl-O-methyl carbamate (XL63, Wacker), N-dimethoxy(methyl)silylmethyl-O-methyl carbamate (XL65, Wacker), hexadecyltrimethoxysilane, 3-octanoylthio-1-propyltriethoxysilane, and partial hydrolysates of said compounds.

Further, the following polymers from Kaneka Corp. can also be used as reactive diluents: MS S203H, MS S303H, MS SAT 010, and MS SAX 350.

Silane-modified polyethers which derive, e. g., from the reaction of isocyanatosilane with Synalox types can likewise be used.

Polymers that can be prepared from an organic framework by grafting with a vinylsilane or by reacting polyol, polyisocyanate, and alkoxysilane can be used, furthermore, as reactive diluents.

A polyol is understood to be a compound that may contain one or more OH groups in the molecule. The OH groups can be both primary and secondary.

Suitable aliphatic alcohols include, for example, ethylene glycol, propylene glycol, and higher glycols, as well as other polyfunctional alcohols. The polyols can contain in addition other functional groups such as. e. g., esters, carbonates, or amides.

To prepare the preferred reactive diluents, the corresponding polyol component is reacted in each case with an at least difunctional isocyanate. Any isocyanate having at least two isocyanate groups may basically be used as the at least difunctional isocyanate, but within the scope of the present invention, compounds with two to four isocyanate groups, particularly with two isocyanate groups, are generally preferred.

Preferably, the compound present as the reactive diluent has at least one alkoxysilyl group, whereby of the alkoxysilyl groups, the di- and trialkoxysilyl groups are preferred.

Suitable as polyisocyanates for the preparation of a reactive diluent are, for example, ethylene diisocyanate, 1,4-tetramethylene diisocyanate, 1,4-tetramethoxybutane diisocyanate, 1,6-hexamethylene diisocyanate (HDI), cyclobutane-1,3-diisocyanate, cyclohexane-1,3 and -1,4 diisocyanate, bis(2-isocyanatoethyl) fumarate, as well as mixtures of two or more thereof, 1-isocyanato-3,3,5-trimethyl-5-isocyanatomethyl cyclohexane (isophorone diisocyanate, IPDI), 2,4- and 2,6-hexahydrotoluylene diisocyanate, hexahydro-1,3- or -1,4-phenylene diisocyanate, benzidine diisocyanate, naphthalene-1,5-diisocyanate, 1,6-diisocyanato-2,2,4-trimethylhexane, 1,6-diisocyanato-2,4,4-trimethylhexane, xylylene diisocyanate (XDI), tetramethylxylylene diisocyanate (TMXDI), 1,3- and 1,4-phenylene diisocyanate, 2,4- or 2,6-toluylene diisocyanate (TDI), 2,4'-diphenylmethane diisocyanate, 2,2'-diphenylmethane diisocyanate, or 4,4'-diphenylmethane diisocyanate (MDI), or the partially or completely hydrogenated cycloalkyl derivatives thereof, for example, completely hydrogenated MDI (H12-MDI), alkyl-substituted diphenylmethane diisocyanates, for example, mono-, di-, tri-, or tetraalkyl diphenylmethane diisocyanate and the partially or completely hydrogenated cycloalkyl derivatives thereof, 4,4'-diisocyanatophenyl perfluoroethane, phthalic acid bis-isocyanatoethyl ester, 1-chloromethylphenyl-2,4- or -2,6-diisocyanate, 1-bromomethylphenyl-2,4- or - 2,6-diisocyanate, 3,3-bis-chloromethyl ether-4,4'-diphenyl diisocyanate, sulfur-containing diisocyanates, as can be obtained by reacting 2 mol of diisocyanate with 1 mol of thiodiglycol or dihydroxydihexyl sulfide, the di- and triisocyanates of dimer and trimer fatty acids, or mixtures of two or more of the aforesaid diisocyanates.

Trivalent or higher valent isocyanates, as can be obtained, for example, by oligomerization of diisocyanates, particularly by oligomerization of the aforesaid isocyanates, can also be used as polyisocyanates. Examples of such trivalent and higher-valent polyisocyanates are the triisocyanurates of HDI or IPDI or mixtures thereof or mixed triisocyanurates thereof, as well as polyphenylmethylene polyisocyanate, as can be obtained by phosgenation of aniline-formaldehyde condensation products. Solvents and/or plasticizers can be used, in addition to or instead of a reactive diluent, for reducing the viscosity of the curable composition.

Suitable as solvents are aliphatic or aromatic hydrocarbons, halogenated hydrocarbons, ketones, ethers, esters, ester alcohols, keto alcohols, keto ethers, keto esters, and ether esters.

The composition described herein can furthermore contain hydrophilic plasticizers. These are used to improve the moisture absorption and thereby to improve the reactivity at low temperatures. Suitable as plasticizers are, for example, esters of abietic acid, adipic acid esters, azelaic acid esters, benzoic acid esters, butyric acid esters, acetic acid esters, esters of higher fatty acids having approximately 8 to approximately 44 carbon atoms, epoxidized fatty acids, fatty acid esters and fats, glycolic acid esters, phosphoric acid esters, phthalic acid esters, linear or branched alcohols containing 1 to 12 carbon atoms, propionic acid esters, sebacic acid esters, sulfonic acid esters, thiobutyric acid esters, trimellitic acid esters, citric acid esters, and esters based on nitrocellulose and polyvinyl acetate, as well as mixtures of two or more thereof.

For example, of the phthalic acid esters, dioctyl phthalate, dibutyl phthalate, diisoundecyl phthalate, or butylbenzyl phthalate is suitable, and of the adipates, dioctyl adipate, diisodecyl adipate, diisodecyl succinate, dibutyl sebacate, or butyl oleate.

Also suitable as plasticizers are the pure or mixed ethers of monofunctional, linear or branched C₄₋₁₆ alcohols or mixtures of two or more different ethers of such alcohols, for example, dioctyl ether (obtainable as Cetiol OE, Cognis Deutschland GmbH, Düsseldorf).

Endcapped polyethylene glycols are also suitable as plasticizers, for example, polyethylene or polypropylene glycol di-C₁₋₄-alkyl ethers, particularly the dimethyl or diethyl ethers of diethylene glycol or dipropylene glycol, and mixtures of two or more thereof.

Suitable plasticizers are endcapped polyethylene glycols, such as polyethylene or polypropylene glycol dialkyl ethers, where the alkyl group has up to four C atoms, and particularly the dimethyl and diethyl ethers of diethylene glycol and dipropylene glycol. An acceptable curing is achieved in particular with dimethyldiethylene glycol also under less favorable application conditions (low humidity, low temperature). Reference is made to the relevant technical chemistry literature for further details on plasticizers.

Also suitable as plasticizers are diurethanes, which can be prepared, for example, by reacting diols, having OH end groups, with monofunctional isocyanates, by selecting the stoichiometry such that substantially all free OH groups react. Optionally excess isocyanate can then be removed from the reaction mixture, for example, by distillation. A further method for preparing diurethanes consists of reacting monofunctional alcohols with diisocyanates, whereby all NCO groups are reacted if possible. In various embodiments, the plasticizer may be a polydimethylsiloxane different from (A).

Preferably, the curable composition contains at least one stabilizer, selected from antioxidants, UV stabilizers, and drying agents.

All conventional antioxidants may be used as antioxidants. They are preferably present up to about 7% by weight, particularly up to about 5% by weight.

The composition herein can contain UV stabilizers, which are preferably used up to about 2% by weight, preferably about 1% by weight. The so-called hindered amine light stabilizers (HALS) are particularly suitable as UV stabilizers. It is preferred within the context of the present invention if a UV stabilizer is employed, which carries a silyl group and is incorporated into the end product during crosslinking or curing. The products Lowilite 75 and Lowilite 77 (Great Lakes, USA) are particularly suitable for this purpose. Further, benzotriazoles, benzophenones, benzoates, cyanoacrylates, acrylates, sterically hindered phenols, phosphorus, and/or sulfur can also be added.

It is often useful to stabilize the compositions in regard to penetrating moisture by means of drying agents in order to increase the storability (shelf life) still further.

Such an improvement in storability can be achieved, for example, by using drying agents. All compounds that react with water with the formation of a group inert to the reactive groups present in the preparation are suitable as drying agents and thereby undergo the smallest possible changes in their molecular weight. Furthermore, the reactivity of the drying agents to moisture penetrating into the preparation must be higher than the reactivity of the groups of the silyl group-bearing polymer of the invention present in the preparation Isocyanates, for example, are suitable as drying agents.

Advantageously, however, silanes are used as drying agents. For example, vinylsilanes such as 3-vinylpropyltriethoxysilane, oxime silanes such as methyl-O,O',O"-butan-2-one-trioximosilane or O,O',O",O"'-butan-2-one-tetraoximosilane (CAS Nos. 022984-54-9 and 034206-40-1) or benzamidosilanes such as bis(N-methylbenzamido)methylethoxysilane (CAS No. 16230-35-6) or carbamatosilanes such as carbamatomethyltrimethoxysilane. The use of methyl-, ethyl-, or vinyltrimethoxysilane, tetramethyl- or tetraethylethoxysilane is also possible. Vinyltrimethoxysilane and tetraethoxysilane are particularly suitable in terms of cost and efficiency.

Also suitable as drying agents are the aforesaid reactive diluents, provided they have a molecular weight (Mₙ) of less than about 5000 g/mol and have end groups whose reactivity to penetrated moisture is at least as high as, preferably higher than, the reactivity of the reactive groups of the polymer used according to the invention.

Lastly, alkyl orthoformates or alkyl orthoacetates can also be used as drying agents, for example, methyl or ethyl orthoformate or methyl or ethyl orthoacetate.

The compositions generally contain about 0 to about 6% by weight of drying agent.

The composition described herein can additionally contain fillers. Suitable here are, for example, chalk, lime powder, precipitated and/or pyrogenic (fumed) silica, zeolites, bentonites, magnesium carbonate, diatomaceous earth, alumina, clay, tallow, titanium oxide, iron oxide, zinc oxide, sand, quartz, flint, mica, glass powder, and other ground mineral substances. Organic fillers can also be used, such as, for example, carbon black, graphite, wood fibers, wood flour, sawdust, cellulose, cotton, pulp, cotton, wood chips, chopped straw, and chaff. Short fibers such as glass fibers, glass filament, polyacrylonitrile, carbon fibers, Kevlar fibers, or polyethylene fibers may also be added. Aluminum powder is also suitable as a filler.

The pyrogenic (fumed) and/or precipitated silica preferably have a BET surface area of 10 to 90 m²/g. When they are used, they do not cause any additional increase in the viscosity of the composition of the invention, but contribute to strengthening the cured composition.

It is likewise conceivable to use pyrogenic and/or precipitated silica with a higher BET surface area, advantageously with 100 to 250 m²/g, particularly 110 to 170 m²/g, as a filler. Because of the higher BET surface area, the same effect, e. g., strengthening of the cured preparation, can be achieved at a smaller weight proportion of silicic acid. Further substances can thus be used to improve the composition described herein in terms of other requirements.

Suitable further as fillers are hollow spheres having a mineral shell or a plastic shell. These can be, for example, hollow glass spheres which are obtainable commercially under the trade names Glass Bubbles^{®}. Plastic-based hollow spheres, e. g., Expancel^{®} or Dualite^{®}, are described, for example, in EP 0 520 426 B1. They are made up of inorganic or organic substances and each have a diameter of 1 mm or less, preferably 500 µm or less.

Fillers that impart thixotropy to the preparations are preferred for many applications. Such fillers are also described as rheological adjuvants, e. g., hydrogenated castor oil, fatty acid amides, or swellable plastics such as PVC. In order to be readily squeezable out of a suitable dispensing device (e. g., a tube), such preparations possess a viscosity from 3000 to 15,000, preferably 40,000 to 80,000 mPas, or even 50,000 to 60,000 mPas.

The fillers are preferably used in an amount of 1 to 80% by weight, particularly preferably 2 to 20% by weight, and very particularly preferably 5 to 10% by weight, based in each case on the total weight of the composition. Of course, mixtures of a number of fillers can also be used. In this case, the quantitative data naturally refer to the total amount of filler in the composition.

The preparation of the curable composition can take place by simple mixing of the recycled organopolysiloxane, optionally the (capped) adhesion promoter, optionally the catalyst, and optionally the other ingredients. This can take place in suitable dispersing units, e. g., a high-speed mixer. In this case, preferably, care is taken that the mixture does not come into contact with moisture as far as possible, which could lead to an undesirable premature curing. Suitable measures are sufficiently known and comprise, for example, working in an inert atmosphere, possibly under a protective gas, and drying/heating of individual components before they are added.

The invention also relates to use of the organopolysiloxane according to the invention as an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents, preferably as an adhesive, sealant, or coating material.

The invention also relates to an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising the organopolysiloxane according to the invention. The adhesive, sealant, or coating materials are suitable, inter alia, for bonding plastics, metals, glass, ceramic, wood, wood-based materials, paper, paper-based materials, rubber, and textiles, for gluing floors, and for sealing building elements, windows, wall and floor coverings, and joints in general. In this case, the materials can be bonded to themselves or as desired to one another.

Many modifications and other embodiments of the inventions set forth herein will come to mind to one skilled in the art to which these inventions pertain having the benefit of the teachings presented in the foregoing descriptions. Therefore, it is to be understood that the inventions are not to be limited to the specific embodiments disclosed and that modifications and other embodiments are intended to be included within the scope of the appended claims. Moreover, although the foregoing descriptions describe some example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

The following examples serve to illustrate the invention, but the invention is not limited thereto.

### Examples

### Example 1: Comparison of energy consumption for OH-terminated PDMS

### Benchmark A: virgin PDMS-OH (non-recycled silicone)

The functional unit for all product system is 1 metric kilogram of PDMS-OH at gate. The production process of virgin organopolysiloxane was modeled staring at silicon metal production from quartzite in an electric arc furnace. The process is followed by grinding and the Müller-Rochow Process to obtain methylchlorosilanes. After distillative separation of the different methylchlorosilanes, dimethyldichlorosilane is further processed through hydrolysis to obtain cyclic siloxanes. After stripping them from the reaction mixture, anionic ring-opening polymerization is used and after quenching with water and distillative purification, organopolysiloxane with -OH endgroups and controlled chain length is obtained.

Indirect energy consumption caused by the production of subsidiary chemicals, solvents and production equipment is excluded.

The virgin organopolysiloxane production was calculated as separate production steps and scaled up to an assumed 1 ton batch of final silicone oil product. The calculated energy inputs per kg of organopolysiloxane are shown in the table below.

| **Input (Energy)** | **Value** | **Unit** | **[%]** |
|---|---|---|---|
| MeCl Production | 5.67 | MJ | 6.40 |
| Si Metal Production | 64.3 | MJ | 72.6 |
| Si Grinding | 0.02 | MJ | 0.04 |
| Müller-Rochow Process | 5.26 | MJ | 5.94 |
| Distillation - Methylchlorosilanes | 3.16 | MJ | 3.57 |
| Hydrolysis | 0.07 | MJ | 0.08 |
| Distillation - Cycles | 4.71 | MJ | 5.31 |
| ROP Cycles | 3.88 | MJ | 4.38 |
| Distillation - PDMS | 1.54 | MJ | 1.74 |
| **Sum Energy** | **88.6** | **MJ** | **100** |

Energy values for the production of chloromethane and the carbothermal reduction of quartzite (Si metal production) were obtained from LCA databases (EU EF database). All other calculations are based on the framework by Piccinno et al. in 2016. Hydrolysis, distillation and ROP processes were designed based on US patent no. 5,473,037, US patent no. 5,475,077, and Köhler, T. et al. Industrial synthesis of reactive silicones: reaction mechanisms and processes. Organic Chemistry Frontiers 2020, 7 (24), 4108-4120.

### Example 1-1

The recycled organopolysiloxane having OH-endgroups was obtained according to the Preparation Embodiment 1 as described above.

Preparation of recycled organopolysiloxane
1000 g RTV-1 silicone (room temperature vulcanizing; 1 component)
1000 g isopropanol
100 g potassium hydroxide
50 g distilled water

In a 4000ml three-necked flask with intensive cooler, the components from the sample recipe are weighed. The mixture is heated to 85 °C while stirring and depolymerized for 3 h with reflux. After cooling, the depolymerized mixture is filtered at approx. 30 °C with a Pall pressure filter, filter BECO KD-5 at 2 bar. The isopropanol-PDMS mixture is washed with aqueous 1 % KCI solution to pH neutrality and the silicone phase is collected. After aqueous processing, the silicone phase is dried with approx. 10 g Na₂CO₃ and filtered off via a frit. The depolymerized material phase is separated into a high boiling high-molecular weight PDMS phase (Mw 4000-7000) (E1) and a low boiling low-molecular weight phase (Mw 250-350) (cyclic organosiloxane) (E2) via thin-film evaporation at 120 °C/ 10 mbar.

Hereby, KOH is used as depolymerization catalyst and an aqueous workup routine yields organopolysiloxane of low molecular weights and heterogeneous endgroups including OH-endgroups (60 %) and a second fraction of siloxane cycles and residual carbohydrates (40%). To ensure comparability, the second fraction is assumed to be further polymerized by anionic ring opening polymerization (ROP) to yield PDMS-OH. It is further assumed that the residual carbohydrates do not interfere the ROP. A process scheme is presented below:
Batch depolymerization → Filtration → Washing and drying → Filtration → Distillation → Anionic ROP → Distillative Purification

Indirect energy consumption caused by the production of subsidiary chemicals, solvents and production equipment is excluded for the recycling processes as well.

The calculation was based on the following base formulation:
PDMS-OH (approx. 140000 g/mol): 66%
Hydrocarbons (C₁₄-C₂₀): 18%
Highly dispersed silica: 13%
Alkyltriacetoxysilanes: 2%
Colour Pigments: 1%
Sn-catalyst: 0.01%

The Inputs and Outputs of the scaled production are displayed below:

| **Overall Input** | **Value [kg]** |
|---|---|
| RTV-1 Silicone | 4.8133 |
| IPA | 3.8506 |
| Water | 0.1162 |
| KOH | 0.4819 |
| 1% KCI aqueous Solution | 5.7759 |
| Cooling Water | 0.2178 |

| **Overall Output** | **Value [kg]** |
|---|---|
| PDMS-OH | 1.0000 |
| Solid Waste | 1.0108 |
| Solvent Waste | 3.8506 |
| Aqueous Waste | 6.3739 |
| Hazardous Waste | 0.0039 |
| Isolated, residual cycles | 0.1550 |
| Low MW PDMS | 1.9061 |

The results of the energy calculation divided by subprocess are shown below:

| **Input (Energy)** | **Value** | **Unit** | **[%]** |
|---|---|---|---|
| Depolymerization reaction | 4.40 | MJ | 15.0 |

| | | | |
|---|---|---|---|
| Filtration | 0.17 | MJ | 0.59 |
| Washing and Filtration | 0.09 | MJ | 0.30 |
| Distillation - Cycles | 20.0 | MJ | 68.2 |
| ROP Cycles | 3.97 | MJ | 13.5 |
| Distillation - PDMS | 0.70 | MJ | 2.37 |
| **Sum Energy** | **29.3** | **MJ** | **100** |

### Example 1-2

The recycled organopolysiloxane having OH endgroups was obtained according to the Preparation Embodiment 2 as described above.

1 gram of base silicone formulation was placed in an oven-dried round bottom flask. 1 mol% of the catalyst mixture (1:1 ratio of tetrabutylammonium bromide and potassium hydroxide), calculated according to the molecular weight of the monomer unit, and 10 mL of toluene as a solvent were added. The flask was sealed with a septum to prevent the evaporation of the solvent. The mixture was stirred in a pre-heated bath at 80°C, for 8 h filtered. The filtrate was washed with water and pentane. Then the solvent was removed under reduced pressure. The product composition was quantified by ¹H, ¹³C and ²⁹Si NMR. The filler could be recovered by washing with a solvent and drying. A mixture of cyclic organosiloxanes was obtained: 59.33% D4, 29.25% D5 and 4.4% D6 which can be received by distillation.

The final yield was assumed to be 80% of the initial PDMS incorporated into the silicones. The described process is extended by anionic ROP and purification to yield the desired PDMS-OH as functional unit. A process scheme is shown below:
Batch depolymerization → Filtration → Washing and drying → Filtration → Distillation → Anionic ROP → Distillative Purification

The calculation was based on the following base formulation:
PDMS-OH (approx. 140000 g/mol): 66 %
Hydrocarbons (C₁₄-C₂₀): 18 %
Highly dispersed silica: 13 %
Alkyltriacetoxysilanes: 2 %
Colour Pigments: 1 %
Sn-catalyst: 0.01 %

Scaling up the reaction procedure according to the framework yielded the following Input-Output balance excluding Energy:

| **Overall Input** | **Value [kg]** |
|---|---|
| RTV-1 Silicone | 2.3502 |
| Toluene | 10.1329 |
| TBABr | 0.0705 |
| KOH | 0.0018 |
| Pentane | 41.4575 |
| Magnesiumsulfate | 0.1880 |
| Water | 0.0013 |
| Cooling Water | 1.4553 |

| **Overall Output** | **Value [kg]** |
|---|---|
| PDMS-OH | 1.0000 |
| Solid Waste | 0.2073 |
| Solvent Waste | 51.5903 |
| Aqueous Waste | 0.1562 |
| Hazardous Waste | 0.4700 |
| Isolated, residual cycles | 0.1550 |

The depolymerization reaction was calculated as stirred batch reactor, filtration as pressurized room temperature filter, distillation as series of distillation towers and ROP also as stirred batch reactor. The results of the energy calculations are presented below:

| **Input (Energy)** | **Value** | **Unit** | **[%]** |
|---|---|---|---|
| Depolymerization reaction | 8.88 | MJ | 8.37 |
| Washing and Filtration | 0.04 | MJ | 0.04 |
| Filtration (MgSO₄) | 0.05 | MJ | 0.05 |
| Distillation - Cycles | 92.7 | MJ | 87.4 |
| ROP Cycles | 3.92 | MJ | 3.70 |
| Distillation - PDMS | 0.490 | MJ | 0.46 |
| **Sum Energy** | **106.1** | **MJ** | **100** |

### Example 2: Comparison of energy consumption for Me-terminated PDMS

### Benchmark B: Preparation of virgin PDMS-Me (non-recycled material)

The functional unit for all product system is 1 metric kilogram of PDMS-Me at gate. The same process was used as described for Benchmark A except the ROP and final distillation steps. The ROP of siloxane cycles to obtain PDMS-Me (100000 cP) was carried out according to US patent no. 4,128,568 using using KOH as catalyst (5 ppm), short chain methyl terminated siloxanes (10 ppm) and trimethylchlorosilane (10 ppm) as catalyst quenching agent. In the distillation, residual cycles and any volatile trace products are removed. After scaling up the processes for virgin PDMS-Me input and output tables were obtained as below:

| **Input (Energy)** | **Value** | **Unit** | **[%]** |
|---|---|---|---|
| MeCl Production | 5.60 | MJ | 6.39297111 |
| Si Metal Production | 63.4 | MJ | 72.4593566 |
| Si Grinding | 0.03 | MJ | 0.03 |
| Müller-Rochow Process | 5.25 | MJ | 5.99 |
| Distillation - Methylchlorosilanes | 3.12 | MJ | 3.57 |
| Hydrolysis | 0.07 | MJ | 0.08 |
| Distillation - Cycles | 4.65 | MJ | 5.31 |
| ROP Cycles | 3.92 | MJ | 4.48 |
| Distillation - PDMS | 1.48 | MJ | 1.69 |
| **Sum Energy** | **87.5** | **MJ** | **100** |

### Example 2-1

The recycled organopolysiloxane having methyl endgroups was obtained according to the Preparation Embodiment 1 as described above.

The same process was used as described for Example 1-1 except addition of short chain methyl terminated siloxanes (preferably Me₃Si(OSiMe₂)₁₀OSiMe₃, 10 ppm) during ROP and the addition of trimethylchlorosilane in the end of ROP as catalyst quenching agent (10 ppm).

The Inputs and Outputs of the scaled production are displayed below:

| **Overall Input** | **Value [kg]** |
|---|---|
| RTV-1 Silicone | 4.7524 |
| IPA | 3.8019 |
| Water | 0.1141 |
| KOH | 0.4752 |
| 1% KCI aqueous Solution | 5.7029 |
| Cooling Water | 0.2150 |
| Me₃Si(OSiMe₂)₁₀OSiMe₃ | 0.0073 |
| Trimethylchlorosilane | 1.14651E⁻⁰⁵ |

| **Overall Output** | **Value [kg]** |
|---|---|
| PDMS-Me | 1.0000 |
| Solid Waste | 0.9980 |
| Solvent Waste | 3.8019 |
| Aqueous Waste | 6.2995 |
| Hazardous Waste | 0.0038 |
| Isolated, residual cycles | 0.1465 |
| Low MW PDMS | 1.8820 |

The results of the energy calculation divided by subprocess are shown below:

| **Input (Energy)** | **Value** | **Unit** | **[%]** |
|---|---|---|---|
| Depolymerization reaction | 4.38 | MJ | 15.1 |
| Pall - Filtration | 0.17 | MJ | 0.59 |
| Washing and Filtration | 0.09 | MJ | 0.29 |
| Distillation - Cycles | 19.7 | MJ | 67.9 |
| ROP Cycles | 4.00 | MJ | 13.8 |
| Distillation - PDMS | 0.67 | MJ | 2.31 |
| **Sum Energy** | **29.0** | **MJ** | **100** |

### Example 2-2

The recycled organopolysiloxane having methyl endgruops was obtained according to the Preparation Embodiment 2 as described above.

The same process was used as described for Example 1-2 except addition of short chain methyl terminated siloxanes (preferably Me₃Si(OSiMe₂)₁₀OSiMe₃, 10 ppm) during ROP and the addition of trimethylchlorosilane in the end of ROP as catalyst quenching agent (10 ppm).

Scaling up the reaction procedure according to the framework yielded the following Input-Output balance excluding Energy:

| **Overall Input** | **Value [kg]** |
|---|---|
| RTV-1 Silicone | 2.3205 |
| Toluene | 10.0048 |
| TBABr | 0.0696 |
| KOH | 0.0186 |
| Pentane | 40.9335 |
| Magnesiumsulfate | 0.1856 |
| Water | 0.0073 |
| Cooling Water | 1.4369 |
| Me₃Si(OSiMe₂)₁₀OSiMe₃ | 0.0073 |
| Trimethylchlorosilane | 1.1465E⁻⁰⁵ |

| **Overall Output** | **Value [kg]** |
|---|---|
| PDMS-Me | 1.0000 |
| Solid Waste | 0.2042 |
| Solvent Waste | 50.9383 |
| Aqueous Waste | 0.1538 |
| Hazardous Waste | 0.4641 |
| Isolated, residual cycles | 0.1465 |

The depolymerization reaction was calculated as stirred batch reactor, filtration as pressurized room temperature filter, distillation as series of distillation towers and ROP also as stirred batch reactor. The results of the energy calculations are presented below:

| **Input (Energy)** | **Value** | **Unit** | **[%]** |
|---|---|---|---|
| Depolymerization reaction | 8.86 | MJ | 8.45 |
| Washing and Filtration | 0.04 | MJ | 0.04 |
| Filtration (MgSO₄) | 0.05 | MJ | 0.05 |
| Distillation - Cycles | 91.6 | MJ | 87.2 |
| ROP Cycles | 3.95 | MJ | 3.77 |
| Distillation - PDMS | 0.47 | MJ | 0.45 |
| **Sum Energy** | **104.9** | **MJ** | **100** |

## Claims

1. Organopolysiloxane derived from a recycled organopolysiloxane and/or cyclic siloxane compound.

2. Organopolysiloxane according to claim 1, wherein at least 20 %, preferably at least 30 %, more preferably at least 50 %, of its siloxane repeating units are derived from a recycled organopolysiloxane and/or cyclic siloxane compound.

3. Organopolysiloxane according to claim 1 or 2, wherein 100 % of its siloxane repeating units are derived from a recycled organopolysiloxane and/or cyclic siloxane compound.

4. Organopolysiloxane according to at least one of the preceding claims, wherein the recycled organopolysiloxane and/or cyclic siloxane compound requires less than 110 %, preferably less than 80%, more preferably less than 60 %, most preferably less than 40 %, of energy consumption for the production compared to a non-recycled organopolysiloxane and/or cyclic siloxane compound.

5. Organopolysiloxane according to at least one of the preceding claims, wherein the recycled organopolysiloxane has at least one terminal hydroxy group or alkyl group, preferably at least two terminal hydroxy groups or alkyl groups.

6. Organopolysiloxane according to at least one of the preceding claims, wherein the recycled organopolysiloxane has at least two terminal hydroxy groups.

7. Organopolysiloxane according to at least one of the preceding claims, wherein the recycled organopolysiloxane and/or cyclic siloxane compound is obtainable by a process for depolymerization of a silicone formulation which comprises at least one organopolysiloxane polymer (A).

8. Organopolysiloxane according to claim 7, wherein the depolymerization of a silicone formulation comprises a step of reacting (A) the at least one organopolysiloxane polymer with (B) at least one base catalyst, preferably at least one metal hydroxide, (C) at least one alcohol, and (D) water at a temperature of >50 °C, preferably >60 °C, more preferably >70 °C, even more preferably >75 °C, most preferably >80 °C.

9. Organopolysiloxane according to claim 7, wherein the depolymerization of a silicone formulation is carried out in the presence of
(a) at least one inorganic hydroxide;
(b) at least one ammonium salt and/or at least one phosphonium salt having a pH value of from 5.0 to 9.0; and
(c) at least one solvent.

10. Organopolysiloxane according to any one of claims 7 to 9, wherein the at least one organopolysiloxane polymer (A) has unit formula (I)
(R¹₃₋ₓR²ₓSiO_{1/2})ₐ(R¹_{2-y}R²_{y}SiO_{2/2})_{b}(R¹_{1-z}R²_{z}SiO_{3/2})_{c}(SiO_{4/2})_{d} (I)
wherein each R¹ is independently selected from the group consisting of substituted or unsubstituted hydrocarbyl groups, which may be optionally interrupted by at least one heteroatom, a hydroxy group, hydrogen, and hydrolysable groups; each R² is independently selected from aliphatically unsaturated groups; x has a value from 0 to 3, y has a value from 0 to 2, and z has a value from 0 to 1; subscripts a, b, c and d represent mole fractions of each unit in the unit formula, and subscripts a, b, c, and d have values such that preferably 0<a≤0.3, preferably 0.4≤b<1, preferably 0≤c≤0.2 and preferably 0≤d≤0.3, with the proviso that a+b+c+d=1.

11. A curable composition comprising at least one organopolysiloxane according to at least one of the preceding claims.

12. The curable composition according to claim 11, wherein the composition comprises at least one additional organopolysiloxane which is not derived from a recycled organopolysiloxane and/or cyclic siloxane compound.

13. Use of an organopolysiloxane according to at least one of claims 1 to 10 as an adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents.

14. An adhesive, sealant, coating material, lubricant, grease, additive, skin care products, shampoos, implants, prostetics, tubing, potting, encapsulation, insulation, gasketing, vibration dampening, bakeware, textile or fabric coating, or waterproofing agents comprising an organopolysiloxane according to at least one of claims 1 to 10.
